# EUROPEAN PATENT APPLICATION

(11) **EP 1 589 454 A1**
(43) Date of publication of application: **26.10.2005**
(21) Application number: 04704731.1
(22) Date of filing: 23.01.2004
(51) Int. Cl.: G06F 17/60

(54) **POINT MANAGEMENT METHOD AND POINT MANAGEMENT SYSTEM**

(30) Priority: 23.01.2003 JP 2003014927; 23.01.2003 JP 2003014928
(71) Applicant: Aruze Corp., Tokyo 135-0063 (JP)
(72) Inventor: HIRANOYA, Nobukatsu Aruze Corp., Koto-ku, Tokyo 1350063 (JP)
(74) Representative: Kuhnen & Wacker
(86) International application number: PCT/JP2004/000584
(87) International publication number: WO 2004/066179

(57) **Abstract**

Different types of points of users are converted to common points in a point conversion process. When a point data of a user is transmitted from an enterprise site where user points are individually managed to a common point site where user points are commonly managed, access from the enterprise site to the common point site is unidirectionally performed by permitting the transfer of data only from the enterprise site to the common point site. Thus, access to the enterprise site is not permitted. Since the unidirectional access from the enterprise site to the common point site is performed in point conversion, the connection destination of access from a user to a common point site is transferred to an enterprise site. The above-mentioned transfer of access enables point data to be transmitted to the common point site without access from the common point site to the enterprise site.

## Description

### Technical Field

The present invention relates to a point management method and a point management system for exchange and/or management of a point assigned to a user such as a member, etc. from an enterprise, and more specifically to a point management method and a point management system for point conversion and/or point management for conversion of individual points provided by a plurality of enterprises to common points.

### Background Art

Recently, with the increasing variety of taste of consumers and demanders, each enterprise aims at enhancing client loyalty and acquiring high-grade clients, assigns to a client a "point" which can be exchanged for goods and services depending on the amount of purchase of goods, the frequency of use of services, the frequency of use of a card, etc., and stores and manages the exchange status of points obtained and accumulated by a client in a point exchange system or a point management system. These points are stored on a private point card and held by each client.

Since the point exchange/management system is individually introduced and performed by each enterprise, one client (user) holds many kinds of points, and has to use each point card for corresponding goods and services. Generally, it is possible to exchange each point for the goods and services relating to the enterprise as a point issuer. Therefore, if varieties of points can be integrated into one group, they can be a large value. However, there has been the problem that these points cannot be used as integrated values. In addition, for an enterprise as a point issuer, there has been the problem of the cost required in implementing necessary facilities, and maintaining, managing, and controlling the entire system.

To solve the above-mentioned problems, a common point management system is proposed by, for example, Japanese Patent Application Publication No. 2002-216060. In this common point management system, each enterprise issues a common point, and a user can request any enterprise to exchange and convert a point for a desired type of point.

As another method for solving the above-mentioned problems, Japanese Patent Application Publication No. 2002-298051 discloses a point system for converting a point issued and managed by a plurality of enterprises to a reference point available in the point system. In this point system, when a user requests point conversion from an original point to a conversion target point, it is checked with an original point issue organization (enterprise) whether or not a user holds a point.

In the above-mentioned system, a point management organization and a common point management organization are provided at the site in a network, and a point can be used in the network by accessing a home page of each site. Thus, when a point system is used by accessing a home page, unauthorized access is to be prevented, thereby ensuring security.

As a method for preventing unauthorized access to a home page, there is a well-known method of setting a password on a home page. As a method for setting a password on a home page, for example, there is a method of prohibiting anonymous access by setting a WWW server, a method of setting an simple password using Java Script (registered trademark), a method of using a URL as a password, etc.

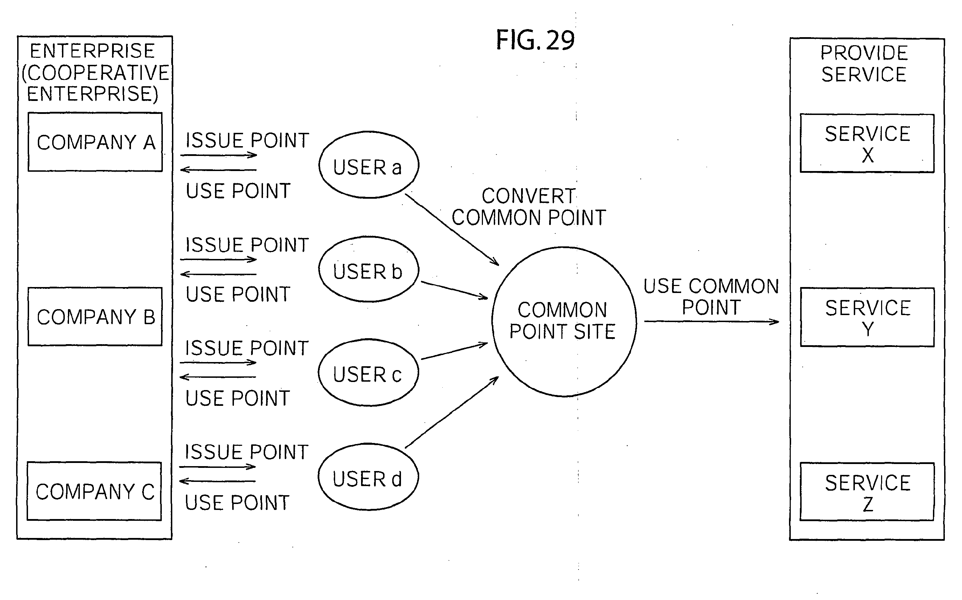

Figure 29 is an explanatory view of a point system for converting a point provided by each enterprise to a common point. Each user (user a to user d) holds various points issued by an enterprise (enterprise A to enterprise C) . These points are converted to common points at a common point site. Using the common point, various services (service X to service Z) can be used.

When a user use a point issued by each enterprise, and when there is no point held by the user, the opportunity of using a point is reduced. This can be a problem for a user not to be able to use remaining fractional points. Also for an enterprise as a point issuer, remaining unexchanged points cause the problem that an unrealized point processed as a reserve for a predetermined period is regarded as a profit on which a tax is levied.

According to the system for issuing the above-mentioned common point and converting an individual point to a common point by performing point conversion, a larger number of opportunities to use the points are assigned to each user. Thus, it is expected that unrealized points can be reduced.

According to a system in which a common point is issued by each enterprise, a user can be free of the trouble of managing and using points individually for each enterprise.

However, in a conventional system in which only common points are issued and used, there is the problem that each enterprise cannot issue a unique point, and also the problem that it is necessary for an enterprise to reserve and manage the facilities and personnel to prevent the disclosure of client data managed by each enterprise among the enterprises interconnected to one another through common points.

In a system which converts and uses points issued by a plurality of enterprises, there is the problem that since access can be gained between each enterprise and an organization for managing a common point, facilities and personnel for ensuring security are to be reserved and there is an increasing cost for them.

That is, when a common point exchange/management system is accessed and a user issues an instruction to convert a point, control is performed such that a point issue/management system of each enterprise can be accessed by a common point exchange/management system and a point can be directly converted. As a result, there is the possibility of unauthorized access to a point of the point issue/management system of each enterprise, and also the possibility of unauthorized access to personal information held by the enterprise having nothing to do with a point to be exchanged.

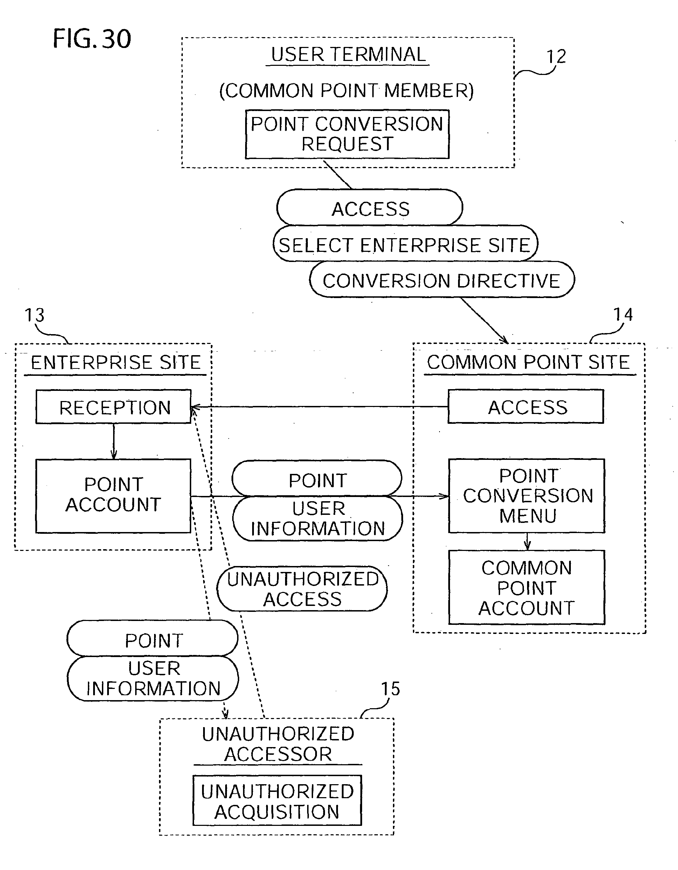

Figure 30 is an explanatory view of the outline of the conventional point exchange/management system. In Figure 30, each enterprise of a point issue organization, a point management organization, etc. is provided with an enterprise site 13 to issue a point and manage an issued point. A user normally accesses the site using a user terminal 12, and uses a point at each enterprise site 13.

When a user uses each point after obtaining it as a common point, the user uses a common point site 14 provided in a common point management organization to have a point managed by each enterprise converted to a common point. To use a common point, a user uses the user terminal 12, accesses the common point site 14, selects the enterprise site 13 for managing a desired point, and instructs the common point site 14 to convert a point.

The common point site 14 receives the access and the instruction, accesses the enterprise site 13 selected by the user, fetches point data and user information from a point account of a user managed by the enterprise site 13, converts the fetched point data to a common point, and records the point on the common point account assigned to the user. A common point account is used in managing a common point of each user at the common point site 14.

Since the system configuration shown in Figure 30 is based on the data exchange between the common point site 14 and each enterprise site 13, it is necessary for the enterprise site 13 to avoid access from an unauthorized accessor 15 pretending to be the common point site 14, and ensure security againstunauthorized acquisition ofuserinformation and point data by the unauthorized accessor 15.

In the situation, the present invention aims at providing the technology of point conversion and point management to avoid unauthorized acquisition of user information, etc. in the system of converting/managing a point to a common point.

### Disclosure of the Invention

The first aspect of the present invention in point conversion of converting a user point to a common point is, when point data of a user is transmitted to a common point site for managing a common point from an enterprise site for individually managing a user point, accessing from an enterprise site to a common point site in one direction, permitting transmission of data only from the enterprise site to the common point site, and disabling access to the enterprise site. Thus, unauthorized acquisition of user information from the enterprise site is avoided.

The present invention has a configuration of directing access from a user to a common point site to convert a point in a single direction access from the enterprise site to the common point site. By moving the connection destination of the access, point data can be transmitted to the common point site without accessing from the common point site to the enterprise site.

Conversion of a point from a user point to a common point can be performed at a common point site or each enterprise site. The site at which point conversion is performed holds a conversion rate, and using the conversion rate, a user requested point is converted to a common point.

The present invention can be an aspect of a method and an aspect of a system, and an aspect of a medium recording a program to direct a computer to use a method.

A point management method according to present invention converts points issued by a plurality of point issue organizations to common points managed and operated by a common point management organization. A point management system according to the present invention converts a point issued by a plurality of point issue organizations to common points managed and operated by a common point management organization.

In an aspect of the method and system of the present invention, the subject of embodying point conversion can be a common point management organization, a point issue organization, or a point management organization, and a combination of them.

The point issue organization issues for each enterprise a point to be used by a user. The user can receive and use an issued point by accessing the enterprise site provided by each enterprise. The issued point can be managed not only by a point issue organization, but also by a point management organization.

A point management organization manages a point issued by a point issue organization, and can be provided at an enterprise site. A user can use a point by accessing an enterprise site provided by each enterprise for management of a point.

The point management method and the point management system according to the first mode of the present invention are embodied by a common point management organization.

The point management method according to the first mode includes: a step of accepting from a user access for request to convert a user point issued by the point issue organization to a common point; a step of transferring a connection destination of access to the point issue organization which issues an original point or a point management organization which manages the point; and a step of receiving a transfer of a conversion-requested point from the point issue organization or the point management organization.

In the point management system according to the first mode, a common point management device includes: means for transferring a connection destination of access from a user terminal device which requests to convert a point of a user issued by an individual point management device to a common point to the individual point management device which issues an original point; and means for receiving a transfer of a conversion-requested point from the individual point management device.

The second mode of the point management method and the point management system according to the first aspect of the present invention is embodied by a point issue organization or a point management organization.

The point management method according to the second mode includes: a step of a point issue organization which issues an original point or a point management organization which manages the point receiving access from a user for a point conversion request by transfer of the connection destination of access by the common point management organization; and a step of transferring a common point to a common point management organization according to a user conversion request.

The point management system according to the second mode further includes means for transferring a conversion-requested point to a common point management organization by a point issue organization or a point management organization.

The third mode of the point management method and the point management system according to the first aspect of the present invention is embodied by a common point management organization and a point issue organization or a point management organization.

The point management method according to the third mode includes: a step of a common point management organization accepting access from a user requesting conversion of a user point issued by the point issue organization to a common point; a step of transferring a connection destination of access to the point issue organization which issues an original point or a point management organization which manages the point; a step of the point issue organization or the point management organization receiving access by transfer of a connection destination of access by the common point management organization, and transferring a user conversion-requested point to the common point management organization; and a step of the common point management organization receiving a transfer of a conversion-requested point from the point issue organization or the point management organization.

The point management system according to the third mode includes: means for a common point management device transferring a connection destination of access from a user requesting conversion from a user point issued by an individual point management device to a common point to the individual point management device which issues an original point; and means for receiving a transfer of a conversion-requested point from the individual point management device. The individual point management device includes means for transferring a point conversion-requested by the user to the common point management device.

In adjusting a point based on point conversion between a common point management organization (common point management device) and a point issue organization or a point management organization (individual point management device) in the point management method and the system according to the present invention, the common point management organization (common point management device) records a history of a converted point, requests the point issue organization or the point management organization (individual point management device) to adjust a point based on the history. On the other hand, the point issue organization and/or the point management organization (individual point management device) records a history of a conversion-requested point, and compares the record with a request from the common point management organization (common point management device) based on the history.

In each of the above-mentioned modes, the data transmission between the point issue organization or the point management organization (individual point management device) and the common point management organization (common point management device) can be unidirectional transmission from the point issue organization or the point management organization (common point management device) to the common point management organization (common point management device) .

Also in each of the above-mentioned modes, the common point management organization (common point management device) can hold a conversion rate from an original point to a common point. The conversion rate can be changed. The conversion rate can also be held by a point issue organization or a point management organization (individual point management device).

According to the point management method and the point management system of the first aspect of the present invention, unauthorized acquisition of user information can be avoided in the system of converting a point.

According to the second aspect, in converting a point from a user point to a common point, when a point is transmitted from an enterprise site at which a user point is individually managed to a common point site at which a user common point is managed, the access from the enterprise site to the common point site is unidirectional, and only the data transferred from the enterprise site to the common point site is permitted, thereby disabling access to the enterprise site. In the access from the enterprise site to the common point site, a user first accesses the common point site, and then the connection destination of the access to the common point site is transferred to the enterprise site. The transfer of the connection destination of the access from the common point site to the enterprise site is performed by assigning an authentication code to the address information (for example, a URL, a URI, an IP address, etc.) about the point issue organization which issues an original point or the point management organization which manages the point at the common point site, and by transferring the connection destination of access to the point issue organization or the point management organization which is the enterprise site according to the URL provided with the authentication code. Thus, the unauthorized acquisition of the user information from the enterprise site can be successfully avoided.

One of the features of the present aspect is to transfer the connection destination of access from a user to a common point site to an enterprise site to enable point conversion from an enterprise site to a common point site to be realized by unidirectional access. By transferring the connection destination of access, point data can be transmitted unidirectionally to a common point site from an enterprise site to a common point site without direct access from the common point site to the enterprise site.

The present aspect can be realized by a method and a system, and also a medium recording a program used to direct a computer to user the method.

The point management method according to the present aspect converts points issued by a plurality of point issue organizations to common points managed and operated by a common point management organization. A point management system according to the present invention converts a point issued by a plurality of point issue organizations to common points managed and operated by a common point management organization.

In the point management method and the point management system according to the second aspect of the present invention, the subject of embodying point conversion can be a common point management organization, a point issue organization, or a point management organization, and a combination of them.

The point issue organization issues for each enterprise a point to be used by a user. The user can receive and use an issued point by accessing the enterprise site provided by each enterprise. The issued point can be managed not only by a point issue organization, but also by a point management organization.

A point management organization manages a point issued by a point issue organization, and can be provided at an enterprise site. A user can use a point by accessing an enterprise site provided by each enterprise for management of a point.

The common point management organization manages a common point, cooperates with the point management organization and the point issue organization, converts a point issued and managed by the point management organization and the point issue organization to a common point, and uses the common point based on the mutual approval.

The common point site includes means for receiving access from a user, and transferring a connection destination of access to a point management organization or a point issue organization; and means for issuing an authentication code for guarantee of correctness of access.

The first mode of the point management method and the point management system according to the second aspect of the present invention is embodied by the common point management organization.

The point management method according to the first mode includes: a step of accepting from a user access for requesting conversion from a user point issued by a point issue organization to a common point; a step of issuing an authentication code; a step of adding the authentication code to address information (for example, aURL, aURI, an IP address, etc.) about a point issue organization which issues an original point or a point management organization which manages the point; a step of transferring the connection destination of access to the point issue organization or the point management organization according to the address information with the added authentication code; a step of receiving a transfer of a conversion-requested point from the point issue organization or the point management organization based on confirmation of the authentication code transmitted from the point issue organization or the pointmanagement organization; and a step of adding a converted common point to a common point account.

In the point management system according to the first mode of the present aspect, the common point management organization (common point management device) includes: means for accepting from a user access requesting to convert a user point issued by the point issue organization (individual point management device) to a common point; means for issuing an authentication code; means for adding the authentication code to address information about the point issue organization which issues an original point or the point management organization (individual point management device) which manages the point; means for transferring a connection destination of access to the point issue organization or the point management organization according to address information with the added authentication code; and means for receiving a transfer of a conversion-requested point from the point issue organization or the point management organization (individual point management device) based on the confirmation of the authentication code transmitted from the point issue organization or the point management organization, and adding a converted common point to a common point account for management of a common point. The transfer of the connection destination of access performed by the transfer means is performed by adding the authentication code to the address information about the individual point management device which issues an original point, and using the address information with the added authentication code.

The second mode of the point management method and the point management system according to the second aspect of the present invention is embodied by the point issue organization or the point management organization (individual point management device).

The point management method according to the second mode of the present aspect includes: a step of obtaining an authentication code issued by the common point management organization (common point management device) added to the address information for use in transferring the connection destination of access from the common point management organization (common point management device); and a step of transferring a conversion-requested point by a user with the authentication code to the common point management organization (common point management device).

When access is performed from a user to a common point management organization (common point management device) for a conversion request to convert a user point issued by the point issue organization (individual point management device) to a common point, the common point management organization (common point management device) transfers a connection destination of access to the point issue organization or the point management organization (individual point management device), and the point issue organization or the point management organization (individual point management device) which receives the transfer of the connection destination of access transfers the conversion-requested point to the common point management organization (common point management organization). In the transfer of the connection destination of access from the common point management organization (common point management device) to the point issue organization or the point management organization (individual point management device), unauthorized acquisition can be avoided by using the authentication code issued by the common point management organization (common point management device) .

In the point management system according to the second mode of the present aspect, the point issue organization or the point management organization (individual point management device in the point management system includes: means for obtaining an authentication code issued by the common point management organization (common point management device) added to the address information used in transferring the connection destination of access from the common point management organization (common point management device); and means for transferring a conversion-requested point with the obtained authentication code to the point management organization (common point management device).

The third mode of the point management method and the point management system according to the second aspect of the present invention is embodies by the common point management organization (common point management device) and the point issue organization or the point management organization (individual point management device).

The point management method according to the third mode of the present aspect includes: a step of accepting from a user access for requesting conversion from a user point issued by a point issue organization (individual point management device) to a common point; a step of issuing an authentication code; a step of adding the authentication code to address information about a point issue organization which issues an original point or a point management organization (individual point management device) which manages the point; a step of transferring the connection destination of access to the point issue organization or the point management organization (individual point management device) according to the address information with the added authentication code; a step of the point issue organization or the point management organization (individual point management device) obtaining and holding an authentication code issued by the common point management organization (common point management device) added to the address information used in transferring the connection destination of access from the common point management organization (common point management device); a step of transferring a conversion-requested point from a user with the authentication code to the common point management organization (common point management device); and a step of accepting a transfer of a point from the point issue organization or the point management organization (individual point management device) when the common point management organization (common point management device) confirms the correctness of the authentication code transmitted from the point issue organization or the point management organization (individual point management device).

In the point management system according to the third mode of the present aspect, the common point management device includes: means for transferring to the individual point management device which issues an original point the connection destination of access from the user requesting conversion from a user point issued by the individual point management device to a common point; means for receiving a transfer of a conversion-requested point from the individual point management device; means for issuing an authentication code; and means for adding a converted common point to a common point account for management of a common point based on a transfer received by the means of receiving the transfer. The transfer of the connection destination of access is performed by the transfer means by adding the authentication code to the address information about the individual point management device which issues an original point by using the address information with the added authentication code. The individual point management device includes: means for transferring a point conversion-requested by a user to the common point management device; and means for obtaining the authentication code added to the address information and transferring the point conversion-requested by the user together with the authentication code to the common point management device.

In adjusting a point based on point conversion between a common point management organization (common point management device) and a point issue organization or a point management organization (individual point management device) in the point management method and the system according to the second aspect of the present invention, the common point management organization records a history of a convertedpoint, requests the point issue organization or the point management organization to adjust a point based on the history. On the other hand, the point issue organization and/or the point management organization records a history of a conversion-requested point, and compares the record with a request from the common point management organization based on the history.

In each of the above-mentioned modes, an authentication code certifies that the accessing user is a member of the common point management organization.

According to the point management method and the point management system of the second aspect of the present invention in the point management technology accompanied by point conversion, the unauthorized acquisition of user information can be avoided.

### Brief Description of the Drawings

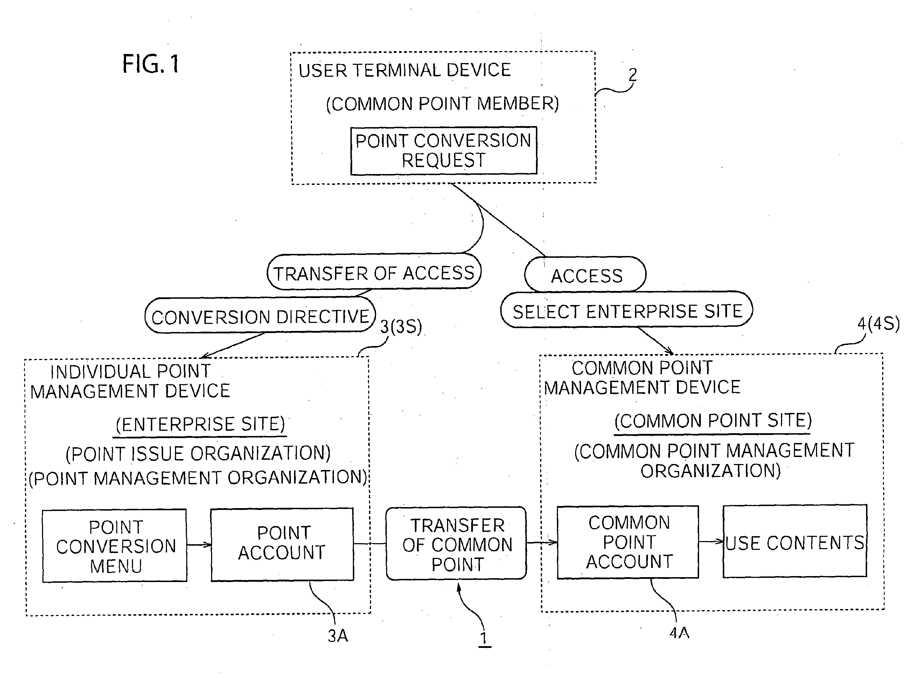

Figure 1 is a block diagram for explanation of the configuration of the point management system according to an embodiment of the present invention;
Figure 2 shows the status of the signal and the data among the user terminal device, the common point management device, and individual point management device;
Figure 3 is a block diagram for explanation of the operation of the point management system;
Figure 4 is an explanatory view of the relationship between the menu performed by the common point management device and the menu performed by the individual point management device;
Figure 5 is an explanatory view of the details of the process performed by the individual point management device;
Figure 6 shows an example of display by the point management menu performed at the common point site;
Figure 7 shows an example of display by the point conversion menu performed at the enterprise site;
Figure 8 is an explanatory view of the use status of a common point;
Figure 9 shows the status of the signals and data among the user terminal device, the common point management device, and the individual point management device;
Figure 10 shows an example of the data of the point use history of the individual point management device;
Figure 11 shows an example of the data of the point use history of the common point management device;
Figure 12 is an explanatory view of an example of request data;
Figure 13 is a block diagram for explanation of the configuration of the point management system;
Figure 14 shows the status for explanation of the signals and data among the user terminal device, the common point management device, and individual point management device;
Figure 15 is a block diagram for explanation of the operation of the point management system;
Figure 16 is an explanatory view of the relationship between the menu performed by the common point management device and the menu performed by the individual point management device;
Figure 17 is a detailed explanatory view of the process performed by the individual point management device;
Figure 18 shows an example of display by the point management menu performed by the common point management device;
Figure 19 shows an example of display by the point conversion menu performed by the individual point management device;
Figure 20 is an explanatory view of the outline of the process when a counter at a shop for point management or a dedicated terminal is used as a user terminal device;
Figure 21 is an explanatory view of an example of the process performed by a counter at a shop;
Figure 22 is an explanatory view of the flow of the point conversion process using a mobile terminal;
Figure 23 is an explanatory view of the flow of the use of a common point using a mobile terminal;
Figure 24 is an explanatory view of the use status of a common point;
Figure 25 shows the status of the signals and data among the user terminal device, the common point management device, and individual point management device;
Figure 26 shows an example of data of the point use history of the individual point management device;
Figure 27 shows an example of data of the point use history of the common point management device;
Figure 28 is an explanatory view of an example of the request data;
Figure 29 is an explanatory view of the point system for converting a point provided by each enterprise to a common point; and
Figure 30 shows the outline for explanation of the conventional point system.

### Best Mode for Carrying Out the Invention

### [First Embodiment]

### [Point Management System]

The point management method and the point management system according to the first embodiment of the present invention are explained below in detail by referring to the attached drawings. Figure A1 is a block diagram of an example of the configuration of the point management system according to the present invention. The point management system performs the point management method according to the present invention.

As shown in Figure A1, a point management system 1 is configured by a user terminal device 2 which can be connected or constantly connected to a network, an individual point management device 3 for providing an enterprise site 3S, and a common point management device 4 for providing a common point site 4S . The components of the point management system 1 are explained below.

### [Network]

Anetwork (communicationnet) used by the point management system 1 enables communication of information among devices to be performed when a session is established for a target device connected to any of cable, radio, dedicated circuit, exchange circuit, etc. A network can be realized by a plurality of networks through a gateway like the Internet. The connection can be accepted although it is not connected to a basic circuit called a backbone, or it is temporarily connected through a PPP connection, etc. so far as information can be communicated when a session is established. The "network" includes a communication network using no exchange such as a dedicated line fixedly applied.

### [User Terminal Device]

The user terminal device 2 is an information processing unit having the function of connection to a network. The user terminal device 2 is connected to the enterprise site 3S and the common point site 4S over a network, and can communicate data. The user terminal device 2 can be terminal equipment, a mobile terminal, a mobile equipment, etc., for example, a PC (personal computer), a mobile telephone, a PDA (personal data assistant), a POS (point of sale).

### [Individual Point Management Device]

The enterprise site 3S is provided by a point issue organization or a point management organization. The point issue organization issues a point to a user as a member, and can also manage an issued point. The point management organization manages the point issued by the point issue organization.

The individual point management device 3 having the function of providing the enterprise site 3S has an arithmetic operation unit (CPU), main memory (RAM), read-only memory (ROM), an input/output device (I/O), an external storage device such as a hard disk device, etc. For example, it is an information processing unit configured by combining a computer, a work station, a WWW (worldwide Web) server, or a WWW server, a database server, an application server. The ROM or a hard disk device, etc. stores a program for allowing the information processing unit to function as the individual point management device 3, or aprogramused to direct a computer to perform a part of the point management method. The program is loaded into the main memory, and the CPU executes the program to realize the individual point management device 3 or apart of the point management method. It is not always necessary that the program is stored in the storage device in the information processing unit, but can be provided from an external device (forexample, anASP (a server of an application service provider, etc.)) and loaded into the main memory.

When a user accesses the individual point management device 3 which provides the enterprise site 3S using the user terminal device 2, the individual point management device 3 provides the user terminal device 2 with information about a point account 3A for management of a point of each user and a point conversion menu 3B for performing a process of converting a point to be managed. By the user performing an predetermined operation according to the point conversion menu 3B, the individual point management device 3 retrieves a point depending on a conversion request from a point held in a point account of a user based on the user specified point conversion request, transfers the point to a common point site, and stores the remaining point after the point conversion in the point account 3A.

When the individual point management device 3 obtains a converted common point from the common point management device 4, the device can transmit the common point to a user and obtain confirmation.

The manager of the individual point management device 3 (enterprise site 3S) can optionally be a point issue organization, or a point issue organization and point management organization.

### [Common Point Management Device]

The common point site 4S is provided by a common point management organization. The common point management organization converts an individual point issued and managed by each enterprise to a common point, and provides it for a user. The common point management organization can be a subject independent of an enterprise, and all or a part of the enterprise. A user uses various contents such as goods, services, etc. using the common point issued by common point management organization.

A common point management device 4 has the function of providing the common point site 4Sfor the user terminal device 2 over a network. The common point management device 4 has an arithmetic operation unit (CPU), main memory (RAM), read-only memory (ROM), an input/output device (I/O), an external storage device such as a hard disk device, etc. For example, it is an information processing unit configured by combining a computer, a work station, a WWW (worldwide Web) server, or a WWW server, a database server, an application server. The ROM or a hard disk device, etc. stores a program for allowing the information processing unit to function as the common point management device 4, or a program used to direct a computer to perform a part of the point management method. The program is loaded into the main memory, and the CPU executes the program to realize the common point management device 4 or apart of the point management method. It is not always necessary that the program is stored in the storage device in the information processing unit, but can be provided from an external device (for example, an ASP (a server of an application service provider, etc.)) and loaded into the main memory.

The common point site 4S provided by the common point management device 4 has a common point account 4A for management of a common point obtained by converting an individual point for each user. A common point is used by retrieving a common point stored in the common point account 4Aby the user terminal device 2, a POS (post-of-sale), etc. provided at a shop, etc. of an enterprise.

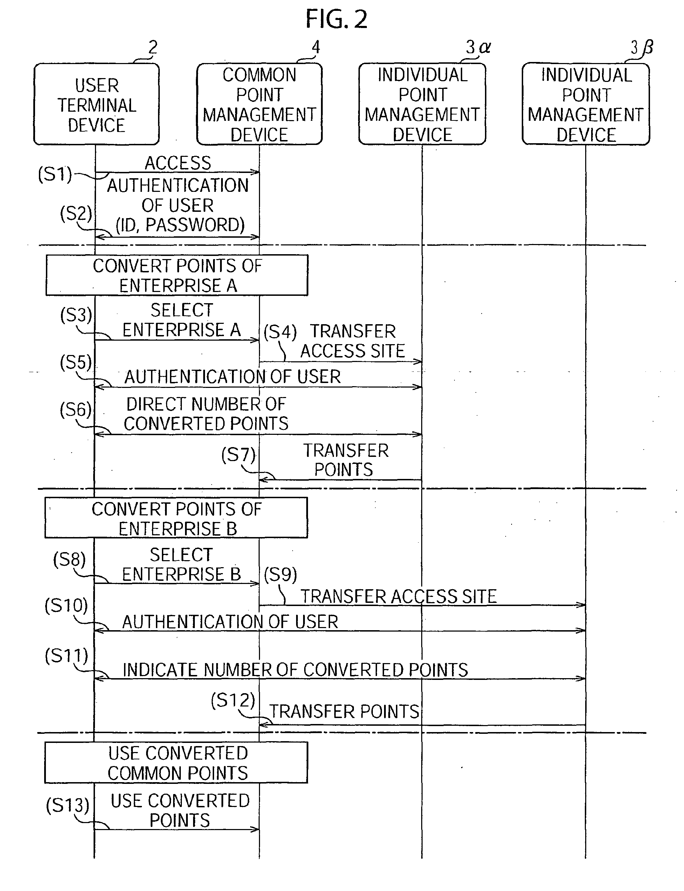

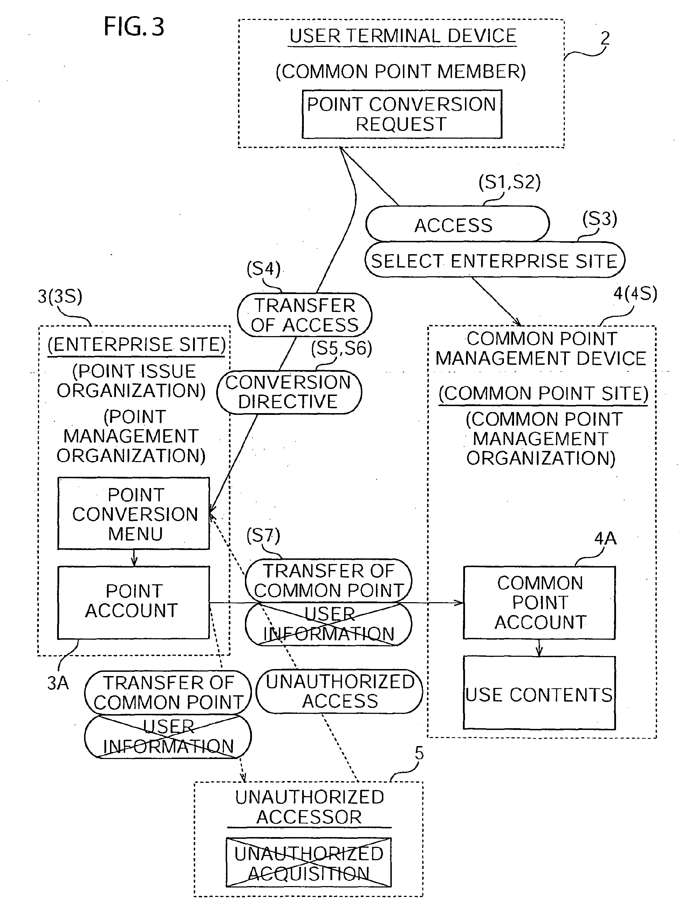

The communication of signals and data in the point management system 1, that is, the communication of signals and data among the user terminal device 2, the individual point management device 3, and the common point management device 4 is explained below by referring to Figures. 2 and 3. The following numbers enclosed by ( ) correspond to the numbers shown in Figures. 2 and 3.

In this example, it is assumed that two different individual point management devices 3 are included. To distinguish the two devices, one is named an individual point management device 3α, and the other an individual point management device 3β. The enterprise site 3S provided by the individual point management devices 3α and 3β are respectively named enterprise sites 3Sα and 3Sβ.

As determined above, the enterprise sites 3Sα and 3Sβ are managed by the point issue organization (or point management organization) using the individual point management devices 3α and 3β, and issue and manage a point. The commonpoint site 4S provided by the common point management device 4 is managed by the common point management organization, converts a point issued and managed by each of the enterprise sites 3Sα and 3Sβ to a common point, and manages and operates the common point. Each enterprise is a supporter of a point for the common point management organization, reduces the point of each enterprise and provides it for the common point management organization in exchange for a corresponding value. The common point management organization provides a user with a point provided from each enterprise as a common point.

On the other hand, the user of the user terminal device 2 is a member of the point system operated by the enterprise A, and has its own point account 3A in the enterprise site 3Sα provided by the individual point management device 3α. The enterprise A, that is, the point issue organization managing the individual point management device 3α, issues a point and manages the issued point, and manages the point of a user using the point account 3A. The point management organization performs only the point issued by the point issue organization, and manages the point of a user using the point account 3A as with the point issue organization.

A user uses the user terminal device 2 such as a PC (personal computer), a portable terminal, amobile terminal, a dedicated terminal, etc. provided at a shop, etc. to first access the common point site 4S provided by the common point management device 4 (step S1). The user makes the registration in advance as a member of the common point management organization for operating the common point management device 4. When the common point management device 4 receives access from the user, it performs an authentication process to determine whether or not the accessing user is a registered member of the common point management organization. The authentication process can be performed by, for example, setting in advance an ID and a password designating the user in the common point management organization, and matching them with those transmitted from the accessing user through the user terminal device 2 in addition to checking the personal information such as a name, gender, birthday, etc. (step S2).

Explained below is the process performed when the user requests the common point management device 4 from the user terminal device 2 to perform the process of converting a point issued by the enterprise A to a common point.

When the user requests to use the point held by the user as a common point, it operates the user terminal device 2, selects the enterprise A, which issues or manages the point to be converted, that is, the individual point management device 3α, and notifies the common point management device 4 of the information designating the selected individual point management device 3α (for example, URL, ID, etc.) (step S3). Upon receipt of the notification that the user has selected the enterprise A, the common point management device 4 transfers the connection destination of access of the user terminal device 2 currentlymade to the commonpointmanagement device 4 to the site of the selected enterprise A, that is, the individual point management device 3α. This is performed by, for example, the redirect method of the HTTP, etc. After the change of the destination of access from the common point site 4S to the individual point site 3Sα, the user terminal device 2 accesses the individual point management device 3α which is the enterprise site 3Sα (step S4).

Upon receipt of access from the user terminal device 2, the individual point management device 3α performs the authentication process of confirming the authentication of the accessing user (step S5) . The authentication process can be performed by, for example, using the ID and the password registered in the enterprise site A by the user. After completing the authentication process (step S5), the user notifies using the user terminal device 2 the individual point management device 3α of the number of points to be converted from the points held by the user (step S6).

The individual point management device 3α checks the conversion condition by determining whether or not the number of points to be converted, which is notified through the user terminal device 2, exceeds the number of points held in the point account 3A of the user, whether or not the term of the points is valid, etc. If the conversion condition is satisfied, the individual point management device 3α notifies the common point management device 4 of the requested number of points to transfer the number of conversion-requested points to the common point site, and subtracts the number of convertedpoints from the number of points stored in the point account 3A, thereby updating the data. The common point management device 4 converts the conversion-requested points notified by the individual point management device 3α to common points, and records the result to the common point account 4A.

The individual point management device 3α issues a request to the common point management device 4 to obtain the information about the converted common point. The individual point management device 3α can transmit the obtained common point information to the user terminal device 2. When the individual point management device 3α obtains an approval and confirmation for conversion from the user terminal device 2, it notifies the common point management device 4 of the approval for the conversion (step S7), and the common point site completes the point conversion process according to the notification.

When the user requests to perform the process of converting a point issued by another enterprise B to a common point, the similar process can be performed.

The user uses the user terminal device 2 to access the common point site 4S provided by the common point management device 4. When the common point management device 4 accepts access from a user, it performs an authentication process to determine whether or not the accessing user is a member registered with the common point management organization. The authentication process can be performed by, for example, setting in advance an ID and a password designating the user in the common point management organization, and matching them with those transmitted from the accessing user through the user terminal device 2 in addition to checking the personal information such as a name, gender, birthday, etc.

Explained below is the process performed when the user requests the common point management device 4 from the user terminal device 2 to perform the process of converting a point issued by the enterprise B to a common point.

When the user requests to use the point held by the user and issued by the enterprise B after conversion to a common point, it operates the user terminal device 2, selects the enterprise B, which issues ormanages the point tobe converted, that is, the individual point management device 3β, and notifies the common point management device 4 of the information designating the selected individual point management device 3β (for example, URL, ID, etc.) (step S8). Upon receipt of the notification that the user has selected the enterprise B, the common point management device 4 transfers the connection destination of access of the user terminal device 2 currently made to the common point to device which provides the point site 3Sβ of the selected enterprise B, that is, the individual point management device 3β (step S9). This is performed by, for example, the redirect method of the HTTP, etc. After the change of the destination of access from the common point site 4S to the individual point site 3Sβ, the user terminal device 2 accesses the device which provides the enterprise site 3Sβ of the enterprise B, that is, the individual point management device 3α.

Upon receipt of access from the user terminal device 2, the individual point management device 3β performs the authentication process of confirming the authentication of the accessing user (step S10). The authentication process can be performed by, for example, using the user ID and the password registered in the enterprise site 3Sβ of the enterprise Bby the user. After completing the authentication process (step S10), the user notifies using the user terminal device 2 the individual point management device individual point management device 3β of the number of points to be converted from the points held by the user (step S11).

The individual point management device 3α checks the conversion condition by determining whether or not the number of points to be converted, which is notified through the user terminal device 2, exceeds the number of points held in the point account 3A of the user, whether or not the term of the points is valid, etc. If the conversion condition is satisfied, the individual point management device individual point management device 3β notifies the common point management device 4 of the requested number of points to transfer the number of conversion-requested points to the common point site 4S, and subtracts the number of converted points from the number of points stored in the point account 3A, thereby updating the data. The common point management device 4 converts the conversion-requested points notified by the individual point management device individual point management device 3β to common points, and records the result to the common point account 4A.

The individual point management device individual point management device 3β issues a request to the common point management device 4 to obtain the information about the converted common point. The individual point management device individual point management device 3β can transmit the obtained common point information to the user terminal device 2. When the individual point management device individual point management device 3β obtains an approval and confirmation for conversion from the user terminal device 2, it notifies the common point management device 4 of the approval for the conversion, and the common point site completes the point conversion process according to the notification (step S12).

After the point conversion, the user can purchase and use the goods, services, contents, (for example, exchange of goods, providing a service) using the stored common points in the common point account 4A (step S13).

According to the present invention, unidirectional transmission is performed from the individual point management device 3 (enterprise site 3S) to the common point management device 4 (common point site 4S) between each enterprise site (individual point management device 3; enterprise site 3S) and the common point site (common point management device 4; common point site 4S), and the individual point management device 3 only transfers the points conversion-requested by the user to the common point management device 4. Therefore, the point information held by each user or the user information is not externally disclosed from the individual point management device 3, thereby enhancing the sequence of the information.

In Figure 3, for example, when the unauthorized accessor 5 intends to obtain the personal information stored by the individual point management device 3 with illegal purpose and accesses the individual point management device 3 by pretending the common point site 4S, the individual point management device 3 checks whether or not the accessor is the common point management device 4. Thus, the individual point management device 3 can determine whether or not the access is unauthorized acquisition.

Although an unauthorized accessor 5 illegally accesses the individual point management device 3, the unauthorized accessor 5 can only obtain data of common points from the individual point management device 3, thereby preventing the disclosure of the user information.

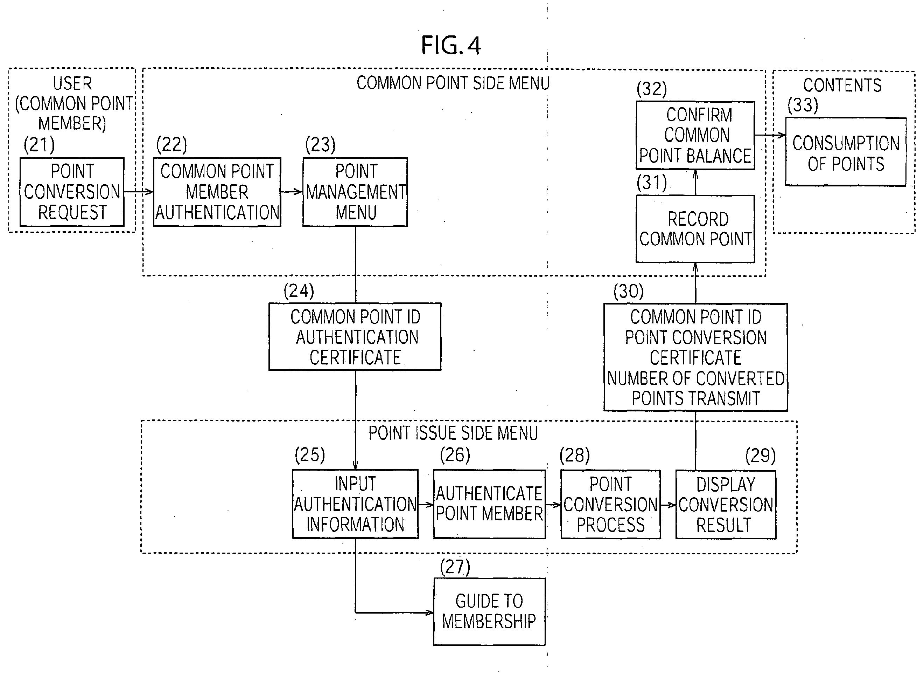

Next, the transition of the menu performed by the common point site 4S provided by the common point management device 4 and the menu performed by the enterprise site 3S provided by the individual point management device 3, and the change of processes are explained below by referring to Figure 4. The numbers enclosed by ( ) correspond to the numbers shown in Figure 4.

First, the user operates the user terminal device 2, accesses the 4S, that is, the common point management device 4, and transmits a point conversion request to the common point management device 4 (21). The point conversion request contains data such as a code identifying the membership of a common point, the number of converted points, the enterprise as a point issuer, etc.

Upon receipt of a point conversion request from the user terminal device 2, the common point management device 4 (common point site 4S) performs an authentication process to confirm whether or not the accessing person is a member of a common point (22) . If it is determined that the user is a member, the common point management device 4 performs the point management menu (23). When the point management menu is performed, the common point management device 4 transmits a unique ID and an authentication certificate for issue of a common point to the individual point management device 3 as a point issuer (24). The "authentication certificate" refers to data for certifying that the access of the user terminal device 2 is authorized, and the accessor is a correct member of a common point. The authentication certificate is encrypted using, for example, a public key.

The menu provided by the individual point management device 3 (enterprise site 3S) input an ID or an authentication certificate transmitted from the common point management device 4 (common point site 4S) (25), and the ID and the authentication certificate are confirmed, thereby determining the correctness of the access (26). If the authentication certificate is encrypted using a public key, it is decoded using a secret key. When the correctness of the access is confirmed, the individual point management device 3 accepts the access from the user terminal device 2, and the subsequent point conversion process is performed between the individual point management device 3 (enterprise site 3S) and the user terminal device 2.

To be more concrete, when the authentication is acknowledged in (25), the individual point management device 3 performs the authentication process to check whether or not the user is a point member at the enterprise site 3S (26) . The point member authentication process can be performed using, for example, a member number, an ID, a password, etc. When the authentication is negated or a user is not accepted as a point member, a guide to a point membership can be issued (27).

If the individual point management device 3 determines as a result of the point member authentication (26) that the user is a point member, then the individual point management device 3 transmits necessary information to the common point management device 4 to transfer the conversion-requested point to the commonpoint site 4S, that is, the common point management device 4. The individual point management device 3 also subtracts the number of points used in conversion from the number of points accumulated in the point account 3A, and performs the update process on the number of points in the point account 3A (28). After the update process, the conversion result such as the number of remaining points, etc. is displayed on the user terminal device 2 as a result display process (29).

The individual point management device 3 (enterprise site 3S) transmits the number of conversion-requested points requested by the user to the common point site 4S, that is, the common point management device 4, together with the ID of the common point site and the point conversion certificate (30) . The common point management device 4 confirms according to the ID of the common point site 4S, etc. transmitted from the individual point management device 3 that the transmission is based on the correctness point conversion request, and that the point conversion has been correctness performed according to the point conversion certificate. After the confirmation, the common point management device 4 receives a transfer of transmitted conversion-requested points. The common point management device 4 converts the transmitted number of points to common points in a predetermined point conversion process. The common point management device 4 stores in advance the conversion rate for use in the point conversion process for converting the number of points to the number of common points, and calculates the number of common points according to the conversion rate. The common point management device 4 records the calculated common points to the common point account (31), thereby terminating the point conversion.

At this time, the individual point management device 3 can request the common point management device 4 to transmit the information about the common points after the point conversion, transmit the obtained information about the common points to the user terminal device 2 to obtain the user confirmation, and record the common points to the common point account 4A after obtaining the user confirmation (31).

Furthermore, when the common point management device 4 receives a request to use common points from a user, it confirms the balance of the common point account 4A at the use request (32), and subtracts the number of points required for the use request from the common point account 4A (33).

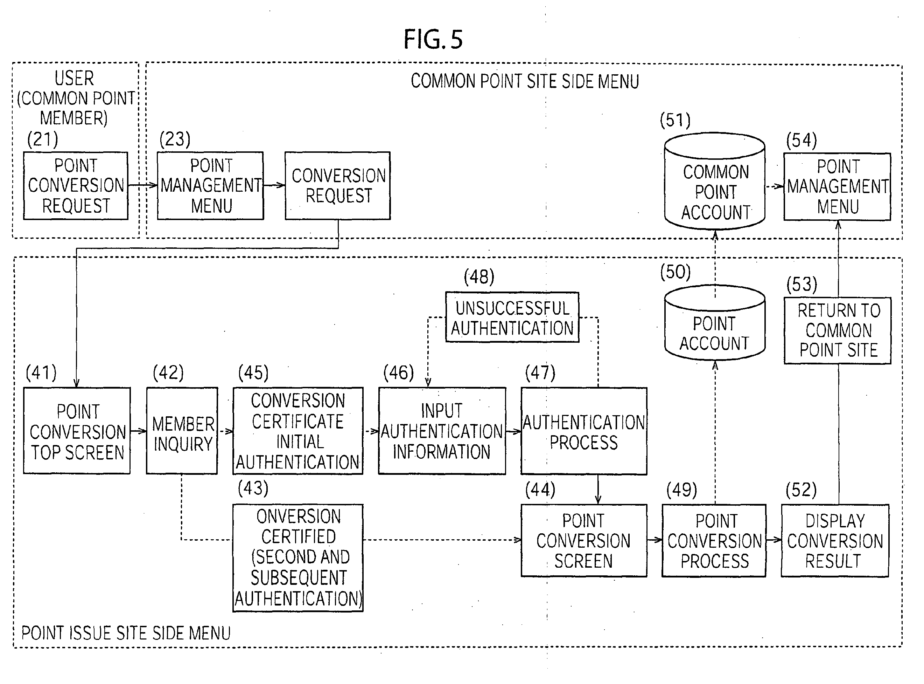

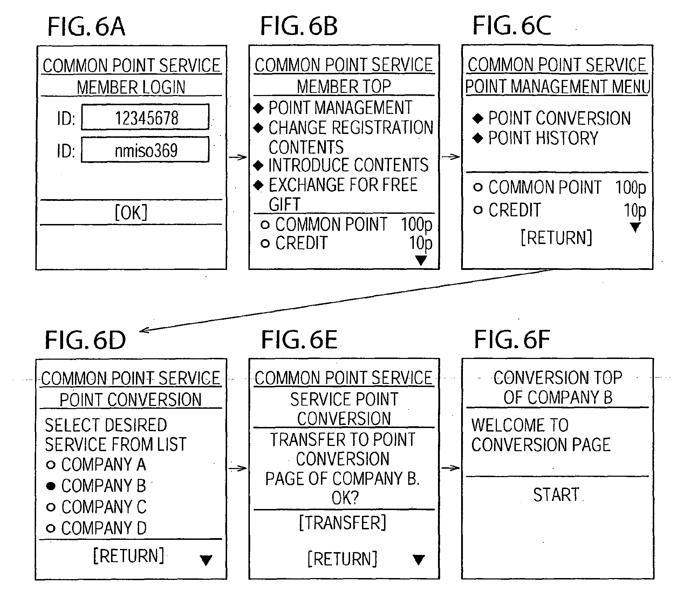

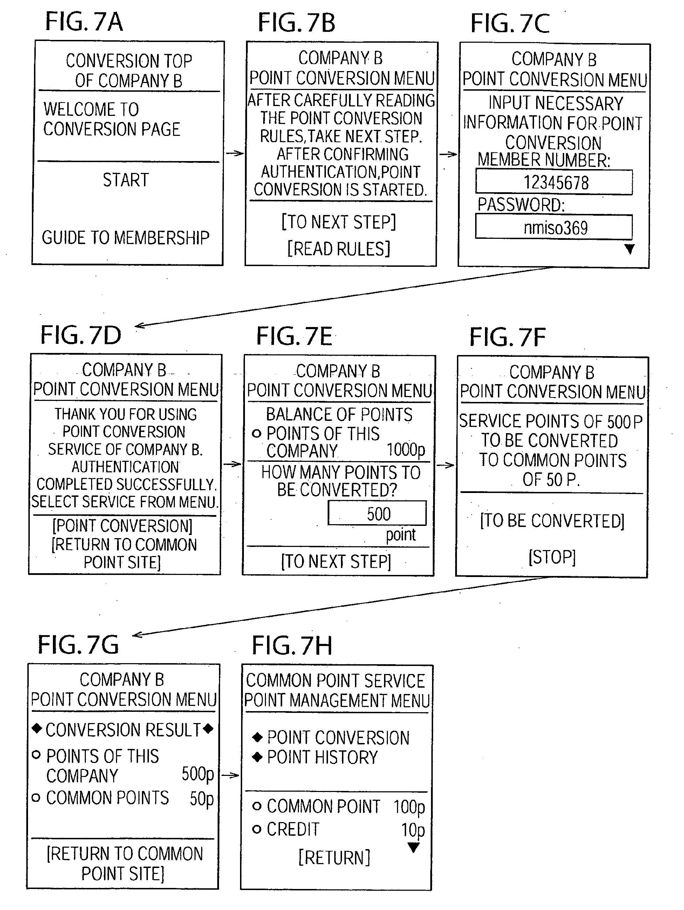

Figure 5 is a detailed explanatory view of the process performed by the common point management device 4 (common point site 4S) and the individual point management device 3 (enterprise site 3S) . Figure 6 shows an example of a display screen displayed on the user terminal device 2 when the user terminal device 2 accesses the common point management device 4 (common point site 4S). Figure 7 shows an example of the display screen displayed on the user terminal device 2 after access of the user terminal device 2 is transferred to the individual point management device 3 (enterprise site 3S). The following numbers enclosed by () correspond to the numbers shown in Figure 5.

First explained below is the operation of the status when the user terminal device 2 accesses the common point management device 4 (common point site 4S). When the user accesses the common point management device 4 (common point site 4S) through the user terminal device 2, the common point management device 4 (common point site 4S) operates the point management menu (23).

Figures. 6A to 6F show examples of the transition of the screens displayed on the display unit (liquid crystal display, etc.) of the user terminal device 2 based on the point management menu.

When the user terminal device 2 accesses the common point management device 4 (common point site 4S), the point management menu displays the screen (Figure 6A) requesting the ID and the password of the user to the user terminal device 2. The user inputs an ID and a password through the user terminal device 2. Figure 6A shows the status of inputting the ID and the password. The common point management device 4 (common point site 4S) records the ID and the password of the user which are predetermined, and matches them with the input ID and password, thereby confirming that the accessor is a member of a common point.

When the point management menu confirms that the accessor is a member, it transmits the member top screen (Figure 6B) to the user terminal device 2 and displays the screen on it. Figure 6B shows an example of the member top screen displayed on the user terminal device 2, shows various process menus such as point management, changes in registered contents, display of contents, exchange for a free gift, etc., and also shows the number of remaining common points, the value of credit, etc. The credit corresponds to a rebate coupon for use in exchanging the common points for a free gift. Common points can be obtained in a game, etc., converted to the credit, and exchanged for a free gift.

On the screen shown in Figure 6B, a user can select a "point management menu", etc. using input means such as a pointing device, a button, etc. of the user terminal device 2. When the user selects a point management menu, the screen display of the user terminal device 2 transfers to the point management menu screen. Figure 6C shows an example of the point management menu screen. On the point management menu screen, the "point conversion menu" for conversion of a point managed by the individual point management device 3 (enterprise site 3S) to a common point and the "point history menu" for referencing the common point history can be selected.

When the user selects the "point conversion menu" using input means such as the pointing device, the button, etc. of the user terminal device 2, the screen display of the user terminal device 2 transfers to the screen of the point conversion menu. Figure 6D shows an example of the point conversion menu. The point conversion menu screen displays a list of enterprises (for example, the companies A, B, C, and D) for which individual points are provided. When the user selects an enterprise (for example, the company B) as the source of the original point from the displayed list of the enterprises, the common point management device 4 performs access conversion by converting the destination of access of the user from the common point management device 4 (common point site 4S) to the selected individual point management device 3 (enterprise site 3S) . In the example of the screen shown in Figure 6E, a message of a change of access to the company B is displayed.

After transfer of the connection destination of access of the user terminal device 2 to the company B (to be concrete, the individual point management device 3 corresponding to the point service of the company B), the screen of the user terminal device 2 shows the top screen display of the point conversion transmitted from the individual point management device 3 (enterprise site 3S) of the company B. Figure 6F shows an example of the top screen display of the conversion menu of the company B.

Explained below is the operation of the status when the user transfers the connection destination of access to the individual point management device 3 (enterprise site 3S). When the connection destination of access of the user is transferred from the common point management device 4 (common point site 4S) to the individual point management device 3 (enterprise site 3S), the individual point management device 3 (enterprise site 3S) operates the point conversion menu.

Figure 7 shows an example of the screen display displayed on the display unit (liquid crystal display, etc.) of the user terminal device 2 by the point conversion menu of the individual point management device 3.

When the connection destination of access is transferred, the individual point management device 3 displays the point conversion top screen on the display unit of the user terminal device 2 (41). Figure 7A shows an example of the point conversion top screen. When "start" is selected on the point conversion top screen, the screen of the member introduction is displayed. Figures. 7B and 7C show examples of the member introduction screen displayed on the display unit of the user terminal device 2.

On the screen shown in Figure 7C, the user is prompted to input a predetermined member number and password, and they are transmitted from the user terminal device 2 to the individual point management device 3. The individual point management device 3 compares the stored member number/password withthereceivedmembernumber/password, andconfirmswhether or not the user is a member (42 in Figure 5).

When it is confirmed that the user is a member, the individual point management device 3 recognizes conversion certificate (43). On the other hand, if it is not confirmed that the user is a member as a result of the matching process, the individual point management device 3 determines that the conversion certificate cannot be obtained, and it is the first authentication process (45), the information for authentication is prompted (46), thereby performing the authentication process (47). If the authentication process cannot be successfully performed (48), the individual point management device 3 prompts the user to input the information for authentication through the user terminal device 2 (46), and the authentication process is performed according to the information for authentication (47). When the authentication is successfully performed, the individual point management device 3 notifies the user terminal device 2 of the completion of the authentication. Figure 7D shows an example of the screen displayed on the display unit of the user terminal device 2 to notify the user of the completion of the authentication process.

After the authentication, the individual point management device 3 displays the point conversion screen on the user terminal device 2, and prompts the number of the desired points to be input (44). Figure 7E shows an example of the point conversion screen displayed on the display unit of the user terminal device 2. On the point conversion screen shown in Figure 7E, the balance of the current point is displayed, and there is an area provided for input of the number of points in requesting a conversion to common points. In the example shown in this figure, the user currently holds 1000 P, and now requests to convert 500 P of the 1000 P to common points.

After the user setting the number of points to be converted on the point conversion screen (Figure 7E), the point conversion menu performs a point conversion process to display the number of common points after conversion on the display unit of the user terminal device 2. In the point conversion process, the number of points conversion-requested by the user is transferred to the common point management device 4 (common point site 4S), the information about the converted common points is obtained by the common point management device 4 (common point site 4S), and the common points are transmitted and displayed on the user terminal.

Figure 7F shows an example of the display screen of the common points after conversion, and the number of common points after conversion and the conversion button "convert" are displayed. In this example, for example, the conversion rate is set to 1/10, and the points of 500 P are converted to common points of 50 P.

When the user selects and activates the conversion button through the input means of the user terminal device 2, the point conversion menu of the individual point management device 3 performs the process of determine the common points (49), calculates the balance of points, and updates the point account 3A (50), thereby notifying the common point management device 4 (common point site 4S) of the confirmation. The commonpointmanagement device 4 (common point site 4S) updates the common point account 4Abased on the received confirmation notification (51).

Furthermore, the point conversion menu displays the conversion result of the point conversion process on the user terminal device 2 (52). Figure 7G shows an example of the display screen as a conversion result of the point conversion process.

After displaying the conversion result, the destination of access of the user terminal device 2 is returned from the individual point management device 3 to the common point management device 4 (common point site 4S) (53). The common point management device 4 (common point site 4S) returns access from the individual point management device 3 (enterprise site 3S), and performs the point management process through the point management menu.

Figure 7H shows an example of the screen displayed by the common point management device 4 (common point site 4S) on the display unit of the user terminal device 2. In this screen example, the point conversion menu or the point history menu can be selected as a point management menu, and the number of common points accumulated in the common point account 4A and the number of credit are displayed. In Figure 7H, 100 P is displayed as common points, and 10 P is displayed as credit.

As described above, the user can add up points by converting the points provided by each individual point management device 3 (enterprise site 3S) to common points.

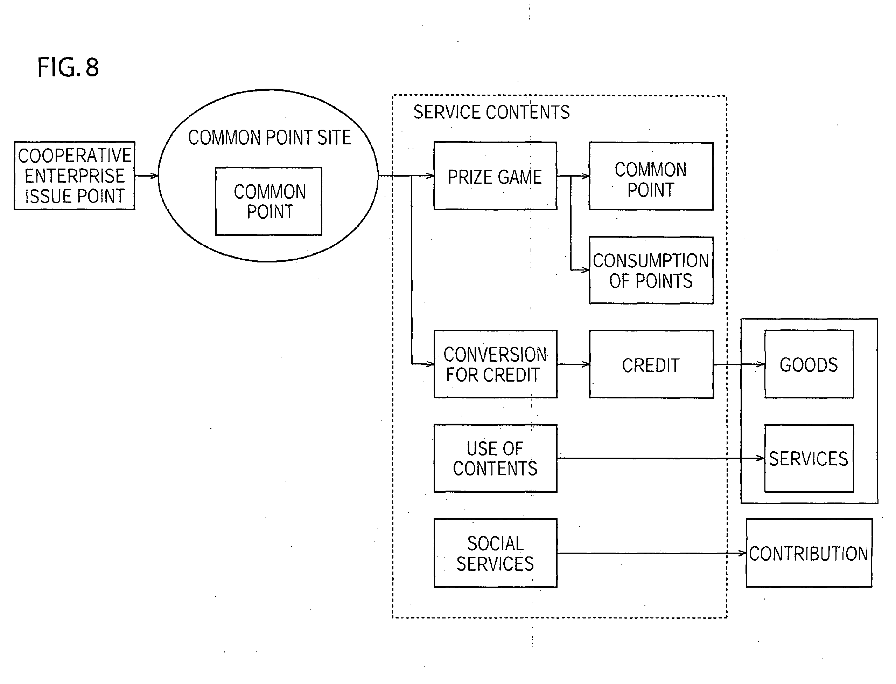

Figure 8 is an explanatory view of the use of common points. The points (individual points) issued by each point issue organization are converted to common points, and can be used in various service contents. The service contents can be, for example, a game for prize, credit conversion, use of contents, social services, etc.

In a game for prize, common points are increased using common points, or common points are consumed. In credit conversion, points are exchanged for credit corresponding to a rebate coupon, and a present, goods, or services.

The contents can be, for example, music, video, and other various services distributed to a user terminal over a network.

By contributing common points to various contribution organizations, the points can be used as social services. The contribution organizations use service contents using provided common points, and can also exchange common points for currencies.

The points used in point conversion according to the present invention can be applied to the points provided by amusement facilities, points provided by various types of stores of domestic electric appliances, gas, etc., points provided by various service facilities which are issued by various types of enterprises as point issue organizations.

The user terminal device 2 used by a user for access to the common point management device 4 (common point site 4S) or the individual point management device 3 (enterprise site 3S) can be terminals of each user such as a PC, a portable terminal, a mobile terminal, etc., and a dedicated terminal mounted in each store.

The individual point management device 3 (enterprise site 3S) can be a point issue organization for issuing a point, and a point management organization for managing an issued point.

Described below is the adjustment of points according to the present invention. In the point management according to the present invention, a point issued and managed by a point issue organization and/or point management organization is debt obligations for users, and transferring a point to a common point management organization is to be responsible by the point issue organization and/or the point management organization for the debt obligations for the common point management organization.

The common point management organization reduces the transferred point into a common point, provides a user who uses the common point with goods and services, thereby erasing the debt obligations, and charges an enterprise which is a point issue organization and/or a point management organization for the debt obligation process, thereby gain a profit.

In the point management system 1 according to the present embodiment, the individual point management device 3 (enterprise site 3S) and the common point management device 4 (common point site 4S) keep a point use history, and performs a billing process based on the point use history, thereby performing a point adjusting process.

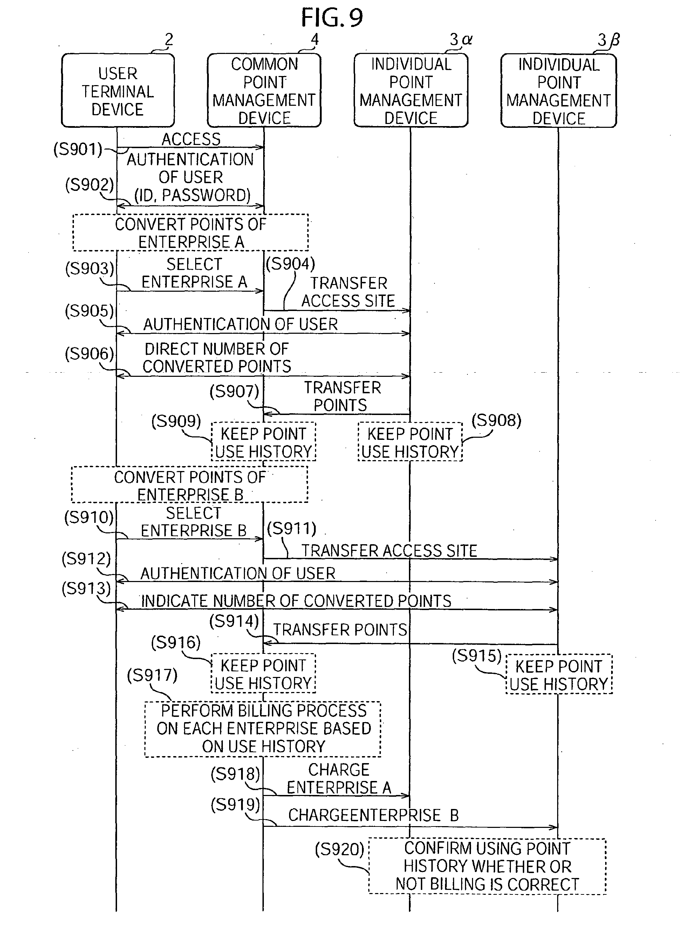

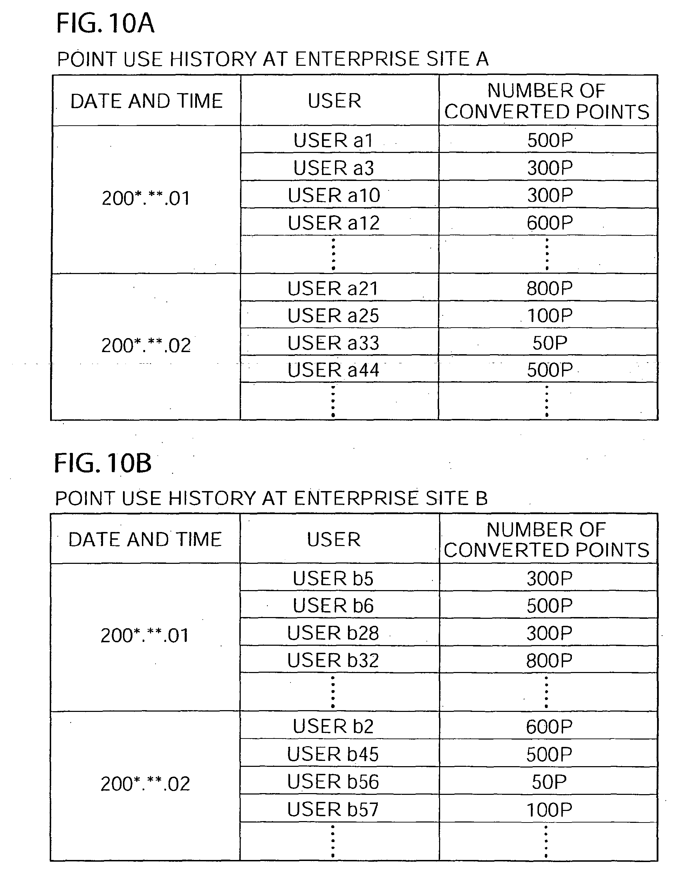

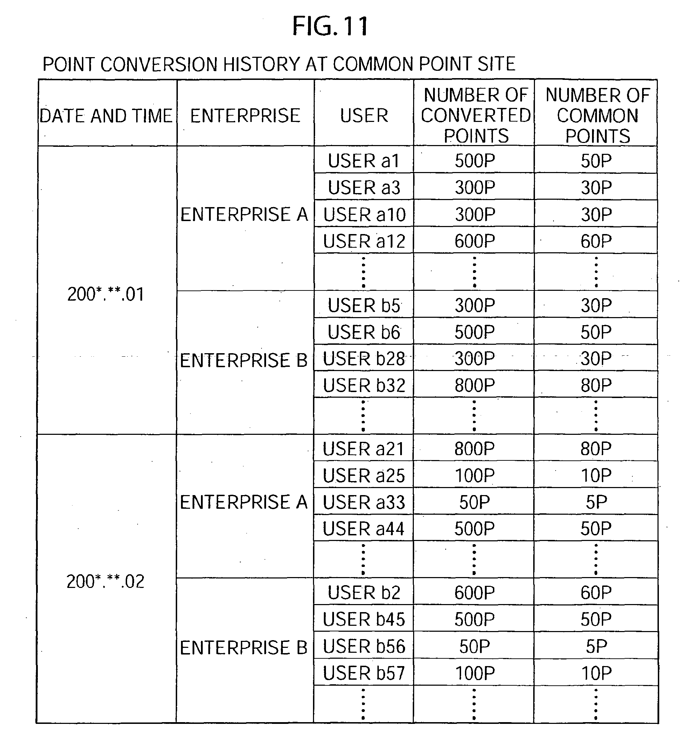

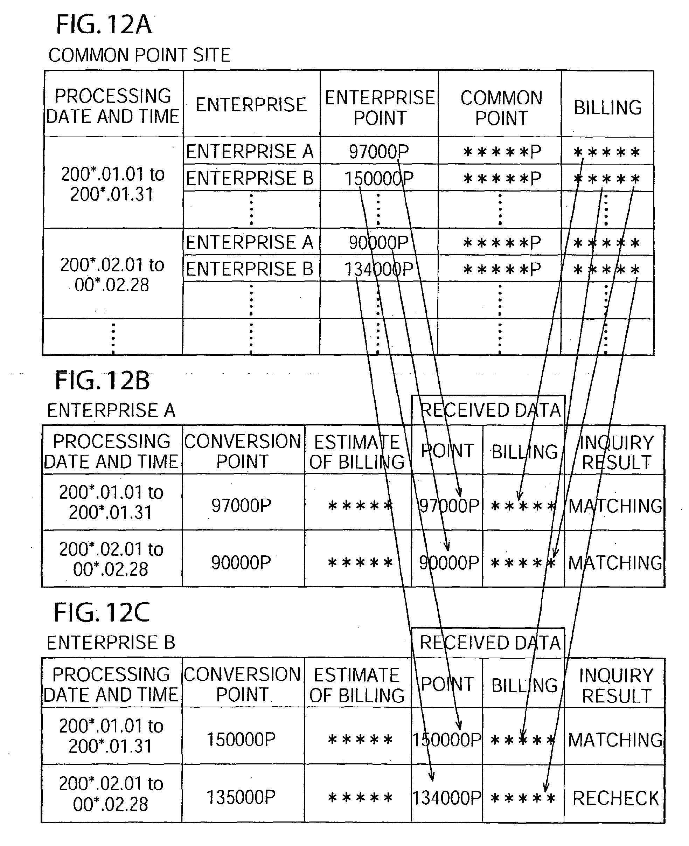

Examples of a billing process are explained below by referring to the data status shown in Figure 9, data examples of the point use history shown in Figures. 10 and 11, and the billing data example shown in Figure 12.

Figure 9 shows the status of signals and data among the user, the common point management device 4 (common point site 4S) corresponding to the common point management organization, the individual point management device 3 (enterprise site 3S) corresponding to the point issue organization and/or point management organization, and the following numbers enclosed by ( ) correspond to the numbers shown in the figure.

The user first accesses the common point management device 4 (common point site 4S) using the user terminal device 2 of a PC (personal computer), a portable terminal, a mobile terminal, or a dedicated terminal, etc. mounted in a store (step S901). The user makes the registration in advance as a member of the common point management organization. When the common point management device 4 (common point site 4S) receives access from the user terminal device 2, it determines whether or not the accessing user is a registered member of the common point management organization. The authentication process can be performed by, for example, setting in advance an ID and a password designating the user in the common point management organization, and using these ID and password. In addition, it can be performed based on the personal information such as a name, gender, birthday, etc. (step S902).

Described below is the case where the user requests to perform the process of converting a point issued by an enterprise A (and an enterprise B) as a point issue organization and/or point management organization to a common point.

When the user requests to use the points held by the user as common points, the user selects using the user terminal device 2 the enterprise A (enterprise B) as an issuer of the points to be converted, and notifies the common point management device 4 (common point site 4S) of it (step S903 (step S910)). When the user selects the enterprise A (enterprise B), in more detail, the individual point management devices 3α and 3β (enterprise sites 3Sα and 3Sβ), the common point management device 4 (common point site 4S) transfers the connection destination of access currently made to common points to the enterprise sites 3Sα and 3Sβ of the selected enterprise A (enterprise B). By the transfer of the sites, the user accesses the individual point management devices 3α and 3β which are the enterprise sites 3Sα and 3Sβ (step S904 (step S911)).

The individual point management device 3α (individual point management device 3β) performs an authentication process to confirm that the person currently accessing the user is the registered user. The authentication process can be performed using, for example, the ID and the password registered by the user in the enterprise site A (enterprise B) (step S905 (step S912)). After the authentication process is completed, the user notifies the individual point management device 3α (individual point management device 3β) of the number of points to be converted from the points held by the user (step S906 (step S913)).

The individual point management device 3α, (individual point management device 3β) determines checks the conversion condition by determining whether or not the number of converted points requested by the user exceeds the number of points held in the point account 3A of the user, whether or not the term of the points is valid, etc. If the conversion condition is satisfied, the individual point management device 3α transfers the number of conversion-requested points to the common point management device 4 (common point site 4S) (step S907 (step S914)).

The individual point management device 3α (individual point management device 3β) transfers the number of conversion-requested points to the common point management device 4 (common point site 4S), and subtracts the number of points used in conversion from the number of points held in the point account 3A of the user, thereby updating the data. The common point management device 4 (common point site 4S) converts the transferred conversion-requested points to common points, and records them in the common point account 4A.

The individual point management device 3α (individual point management device 3β) records the history of the transferred points (step S908 (step S915)). Figures. 10A and 10B show examples of data of the point use history at the enterprise sites 3Sα and 3Sβ. For example, the user and number of converted points of the user are recorded.

In addition, the common point management device 4 (common point site 4S) also records the history of the points transferred from the individual point management device 3α (individual point management device 3β) (step S909 (step S916)). Figure 11 shows an example of data of the point use history of the common point management device 4 (common point site 4S) . For example, each enterprise, user, and the number of converted points of the user, and the number of common points converted at a predetermined conversion rate are recorded.

Figure 9 only shows the enterprisesAandB as enterprises, but any other enterprises cooperating with a common point management organization for point conversion can be processed likewise.

By the transfer of points, each enterprise is responsible for the debt obligations in points for the common point management organization. Meanwhile, the common point management organization is responsible for the debt obligations for each enterprise. Thus, the common point management device 4 (common point site 4S) which is a common point management organization charges each enterprise for points, and each enterprise pays a corresponding value for each charge, thereby settling the point adjustment.

The billing from the common point management device 4 (common point site 4S) to each enterprise can be collectively performed at a predetermined time point, for example, at the end of week, at the end of month, at the end of quarter, etc. for a predetermined period (for example, in week units, in month units, in several month units, annually, etc.). The common point management device 4 (common point site 4S) accumulates points for each enterprise in a predetermined period based on the data of the point use history, calculates the amount of charge for the points, and charges each enterprise with the accumulated points and the amount of charge (step S918, step S919).

Figure 12A shows an example of billing data to be transmitted to each enterprise from the common point management device 4 (common point site 4S) . For example, the accumulated value of points transferred from an enterprise in each billing period, the value of common points, the amount of charge, etc. can be included in the billing data.

Each enterprise accumulates the points in a predetermined period based on the data of point use history, and the amount of charge for the points is estimated. Figures. 12B and 12C show examples of data estimated by the enterprises A and B. For example, in each billing period, an enterprise can make a transfer to include the accumulated value of points, an estimated value, etc..

Each enterprise compares the billing data such as accumulated points, the amount of charge, etc. transmitted from the common point management device 4 (common point site 4S) with the accumulated points and the amount of charge with the accumulated points and the amount of charge calculated by each enterprise to confirm whether or not the billing from the common point management device 4 (common point site 4S) is correct (step S920 shown in Figure 9).

In Figure 12, the correctness of the charge is confirmed with the number of points and the amount of charge, but it is also possible to confirm it only based on the number of points.

According to the embodiment of the present invention, unidirectional transmission can be performed from the individual point management device 3 (enterprise site 3S) to the common point management device 4 (common point site 4S). With this communication system, the user information can be prevented from being disclosed from the individual point management device 3 (enterprise site 3S). Thus, the security can be successfully ensured.

### [Second Embodiment]

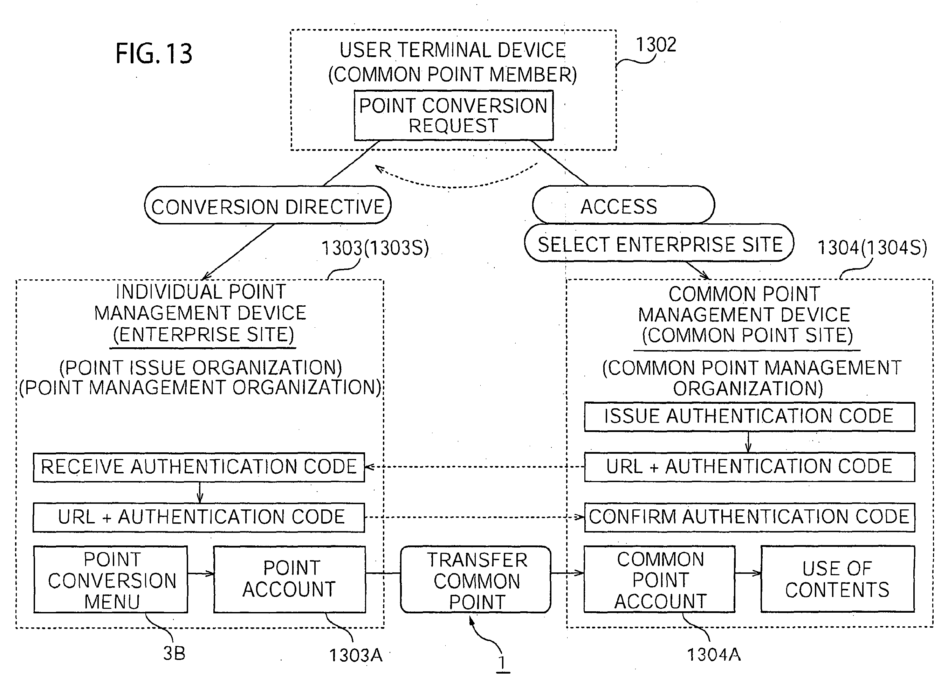

The second embodiment of the present invention is described below in detail by referring to the attached drawings. Figure 13 is a block diagram showing an example of the configuration of the point management system according to the embodiment.

Figure 13 is a block diagram of an example of the configuration of the point management system according to the present invention, and the point management system performs the point management method according to the present invention. As shown in Figure 13, a point management system 1301 is configured by a user terminal device 1302 which can be connected or constantly connected to a network, a individual point management device 1303 for providing an enterprise site 1303S, and a common point management device 1304 for providing a common point site 1304S.

Since the user terminal device 1302, the individual point management device 1303, the enterprise site 1303S, the common point management device 1304, and the common point site 1304S according to the second embodiment are similar to the user terminal device 2, the individual point management device 3, the enterprise site 3S, the common point management device 4, and the commonpoint site 4S according to the first embodiment, the detailed explanation is omitted here.

The common point site 1304S is provided with a common point account 1304A for managing the common point obtained by point conversion for each user. A common point can be used by retrieving a common point stored in the common point account 1304A.

The common point management device 1304 (common point site 1304S) uses an authentication code to guarantee that a user is a member of a common point management organization and that the access between the individual point management device 1303 (enterprise site 1303S) and the common point management device 1304 (common point site 1304S) is correct.

The common point management device 1304 (common point site 1304S) has the function of issuing an authentication code, the function of adding the issued authentication code to the address (for example, an URL) which is the address information about the individual point management device 1303 (enterprise site 1303S) and transferring the connection destination of access of the user terminal device 2 to the individual point management device 1303 (enterprise site 1303S), and the function of confirming the authentication code transmitted from the individual point management device 1303 (enterprise site 1303S). The individual point management device 1303 (enterprise site 1303S) has the function of adding the transmitted authentication code to the address (for example, a URL) which is the address information about the common point management device 1304 (common point site 1304S), and transmitting it to the common point management device 1304 (common point site 1304S).

The common point management device 1304 (common point site 1304S) confirms the authentication code to confirm that the user is a member of a common point management organization, and that there is no unauthorized access between the individual point management device 1303 (enterprise site 1303S) and the common point management device 1304 (common point site 1304S).

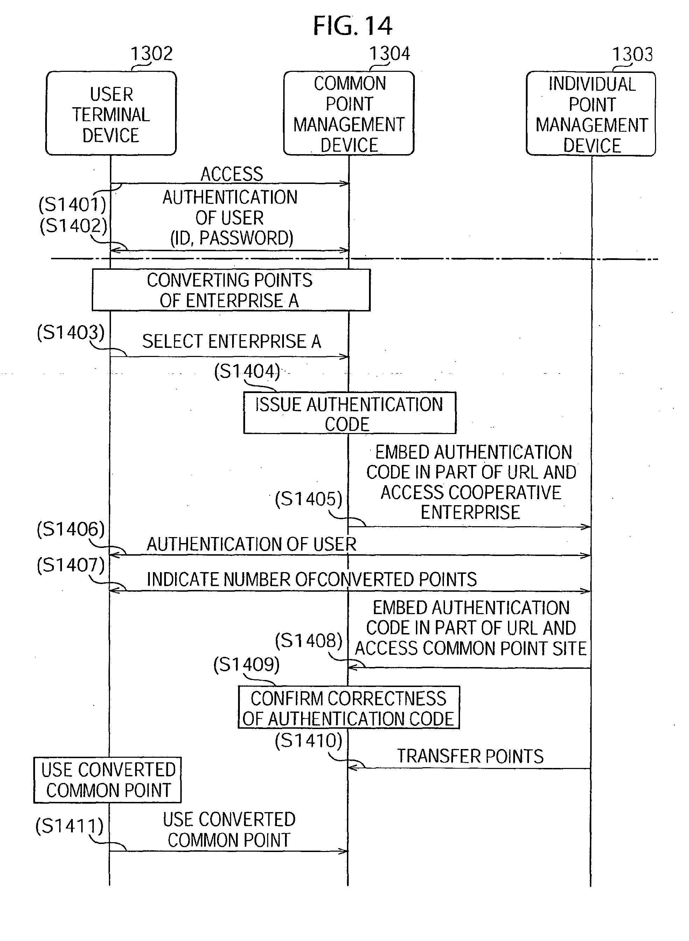

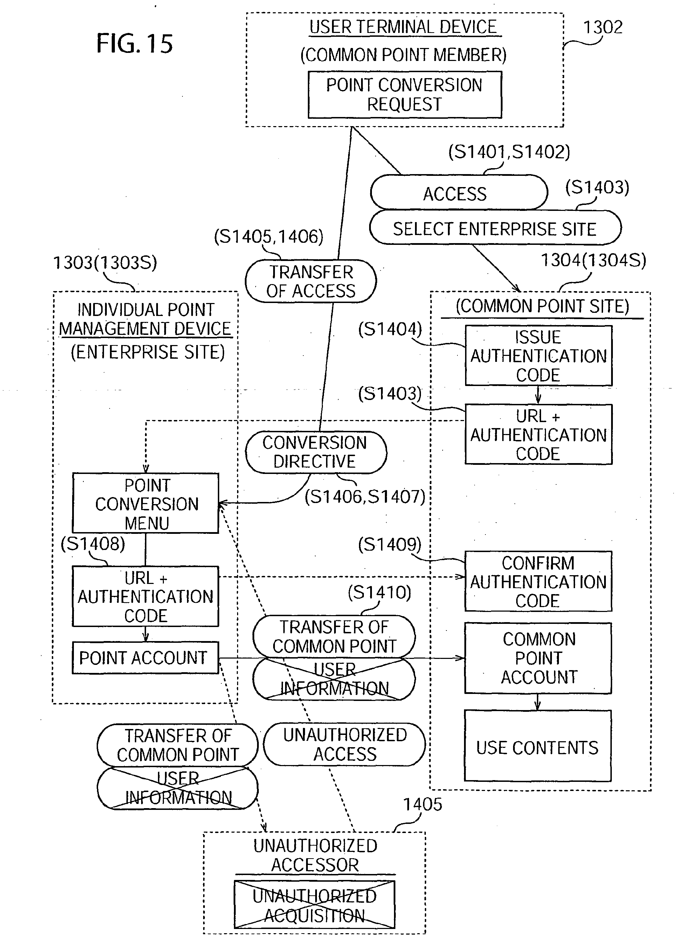

Next, the communication of the signals and data among the user terminal device 1302, the common point management device 1304, (common point site 1304S), and the individual point management device 1303 (enterprise site 1303S) is explained below by referring to Figures. 14 and 15. The numbers enclosed by following ( ) correspond to the numbers shown in Figures. 14 and 15.

The enterprise site 1303S structured in the network by the individual point management device 3 is a site operated by a point issue organization (or a point management organization) for issuing and managing a point. The common point site 1304S structured in the network by the common point management device 1304 is a site operated by the common point management organization, converts the point issued and managed by the individual point management device 1303 to a common point, and manages and operates the common point. Each enterprise supports the point for the common point management organization, reduces the point of each enterprise, provides it for the common point management organization, and obtains a corresponding value in return. The common point management organization provides the point received from each enterprise for a user as a common point.

Meanwhile, the user is a member of a point system operated by the enterprise A, and a point account 1303A is open in the point issue organization or the point management organization managed by the enterprise site 1303S. The point issue organization issues a point and manages the issuedpoint. It manages the point of a user using the point account 1303A. The point management organization only manages a point issued by the point issue organization, and manages the point of a user using the point account 1303A as with the point issue organization.

A user uses the user terminal device 1302 such as a PC (personal computer), a portable terminal, a mobile terminal, a dedicated terminal at a shop, etc. to first access the common point management device 1304 (common point site 1304S) (step S1401) . The user makes the registration in advance as a member of the common point management organization. When the common point management device 1304 (common point site 1304S) receives access from the user, it determines whether or not the accessing user is a registered member of the common point management organization (step S1402). The authentication process can be performed by, for example, setting in advance an ID and a password designating the user in the common point management organization, and using these ID and password. Otherwise, it can be performed based on the personal information such as a name, gender, birthday of the user, etc.

Described below is the process when a user requests the common point management device 1304 through the user terminal device 1302 to perform the process of converting a point issued by the enterprise A to a common point.

When a user requests to use a point held by the user as a common point, the user operates the user terminal device 1302 and selects a point issuer of a point to be converted or a point manager as an enterprise A, that is, the individual point management device 1303, selects the process of notifying the common point management device 1304 of the information (for example, a URL, an ID, etc.) designating the selected individual point management device 3, and notifies the common point site of it (step S1403). When the user selects the enterprise A, the common point management device 1304 transfers the destination of access of the user terminal device 1302 currently directed to the common point management device 1304 to the site of the selected enterprise A, that is, the individual point management device 1303. At this time, the common point management device 1304 issues an authentication code to the individual point management device 1303. The authentication code can be a code for authentication certificate assigned to a member card, etc. indicating that the user is amemberof the common point management organization. The authentication code can be formed by, for example, 20 digits of alphanumeric characters, but the characters, symbols, and the number of digits can be optionally selected. The authentication code contains the record of valid term (for example, the valid term in several hour units), and the use of the expiring authentication code can be limited. The authentication code can be dynamically generated for each time of access, and a different code can be used for each time of access.

The common point management device 1304 which issues an authentication code prevents the degradation of security by unauthorized access using an authentication code by limiting the multiple issue of the same code.

The authentication code is configured such that it can be obtained only by the API (application program interface) for a common point member provided for the common point management device 1304. The API for a common point member can be accessed only by a common point member, and cannot be accessed from the individual point management device 1303 (enterprise site 1303S). Thus, the authentication code can be obtained only when a common point member accesses the common point site 1304S, and the authentication code cannot be obtained by access from the individual point management device 1303 (enterprise site 1303S).

Therefore, when a user converts a point managed by the enterprise A to a common point, the user cannot access the common point site 1304S from the enterprise site 1303S to make confirmation using the authentication code. Therefore, in the present invention, a user first accesses the common point site 1304S, that is, the common point management device 1304 (steps S1401, S1402, and S1403), then the common point management device 1304 embeds the issued authentication code in the URL of the enterprise A selected by the user (step S1404), and accesses the individual point management device 1303 (step S1405). Thus, the access from the user terminal device 1302 is transferred to the individual point management device 1303 through the common point management device 1304. By the transfer of the connection destination of access, the user terminal device 1302 accesses the individual point management device 1303.

The URL can take the form of, for example, http://partner-host (point management name) & (authentication code), etc.

In the communications between the common point management device 1304 and the individual point management device 1303, the common point management device 1304 specifies the enterprise ID designating the enterprise and an enterprise password in addition to the authentication code to the enterprise site API provided for the individual point management device 1303 to perform the process of point conversion.

Afterwards, the individual point management device 1303 authenticates the user accessing the user terminal device 1302 as an authorized user (step S1406). The authentication can be performed using an ID and a password registered in the individual point management device 1303. After successfully performing the authentication, the user operates the user terminal device 1302 to indicate the number of points to be converted from the point held by the user to the individual point management device 1303 (step S1407).

The individual point management device 1303 checks the conversion condition by determining whether or not the number of converted points requested by the user terminal device 1302 has exceeded the points held in the point account 1303A, whether or not the point term is valid, etc. If the conversion condition is satisfied, the conversion-requested number of points is indicated to the common point management device 1304. The common point management device 1304 converts the number of conversion-requested points at the conversion rate, and obtains the number of common points. The conversion rate is determined by mutual agreement of the common point management organization and the enterprise (point issue organization, point management organization), and held and stored by the common point management device 1304. The conversion rate can be varied to be stored in the individual point management device 1303 and the user terminal device 1302 within the gist of the embodiment of the present invention.

The individual point management device 1303 transmits the returned number of common points to the user terminal device 1302 . The user terminal device 1302 displays the number of converted common points, confirms the number of displayed common points, and represents the intention of confirming the number to the individual point management device 1303.

Next, the individual point management device 1303 retrieves the authentication code added to the URL transmitted when the connection destination of access is transferred (step S1405), embeds the retrieved authentication code in the URL of the common point management device 1304, and accesses the common point management device 1304 (step S1408).

The URL used in the access can take the form of, for example, http://maps-host (point management name) & (authentication code), etc.

The common point management device 1304 retrieves the authentication code embedded in the URL, and confirms the correctness of the authentication code (step S1409). The correctness of the authentication code can be confirmed by comparing the authentication code issued by the common point management device 1304 with the retrieved authentication code.

After authentication of about authorized access by the common point management device 1304, the individual point management device 1303 transfers the number of conversion-requested points requested to the common point management device 1304 to common points (step S1410), and subtracts the number of converted points from the number of points held in the point account 1303A, thereby performing update. The common point management device 1304 converts the transferred conversion-requested points to common points, and records them in the common point account.

Then, the common point management device 1304 returns the converted common points to the individual point management device 1303, and the individual point management device 1303 notifies the user terminal device 2 of the returned common points. After confirmation of the user, the individual point management device 1303 notifies the common point management device 1304 of the information, and the common point management device 1304 completes the point conversion process.

The point conversion process can be likewise performed by other individual point management devices except the individual point management device 1303. When the point conversion process is performed by other individual point management devices, the common point management device 1304 can gain access by incorporating a newly issued authentication code in the URL of the other enterprise site 1303S.

After point conversion, the user can use the contents (for example, exchange for goods and providing services) using the common points held in the common point account 1304A (step S1411).

According to the present embodiment, the communication of data between each individual point management device 1303 and the common point management device 1304 can be unidirectionally performed, and the individual point management device 1303 only has to transfer the common points converted at the individual point management device 1303 to the common point management device 1304. Therefore, the point information and the user information held by each user are not disclosed from the individual point management device 1303, thereby enhancing the security of the information.

Furthermore, the authentication code has an expiration date, and the security can be ensured by limiting the multiple use of the issued authentication code.

The data of the expiration date of the authentication code is embedded in the authentication code itself, and the common point management device 1304 does not hold the data of the expiration date. Therefore, it is not necessary for the common point management device 1304 to store the data for management of the expiration date of the authentication data, and it is only necessary to determine the expiration data about the valid term embedded in the authentication data. The data of the expiration date of the authentication code can be, for example, issue time data and valid time data (for example, the time interval after an issue date). If the data of the expiration date is equally set, only the issue time data can be used.

If the unauthorized accessor 5 illegally accesses the individual point management device 1303 (enterprise site 1303S), the individual point management device 1303 (enterprise site 1303S) can only obtain the data of common points, thereby preventing the unauthorized acquisition of the user information.

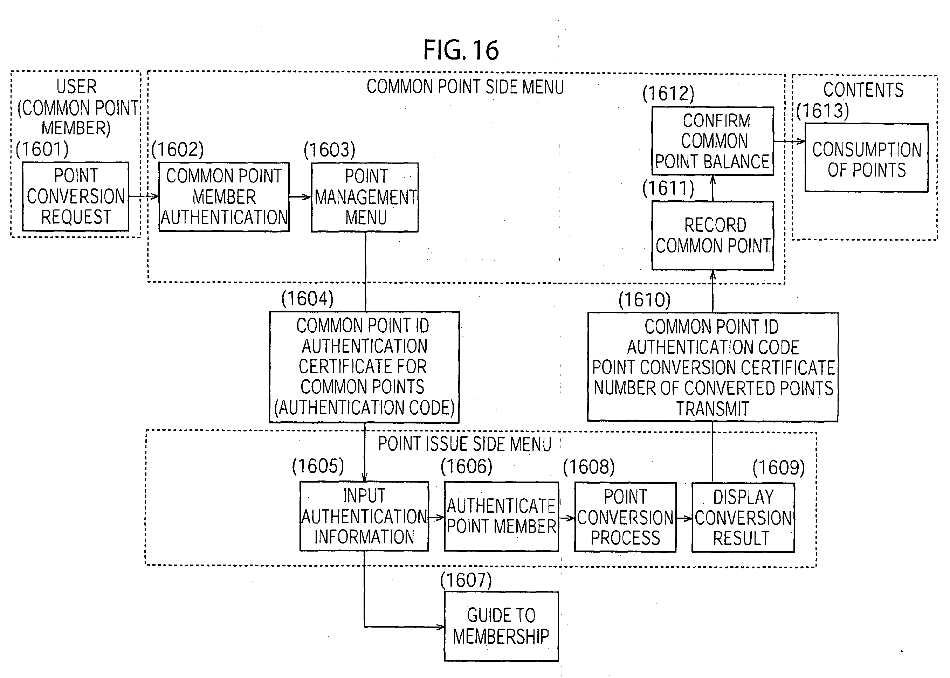

Next, the relationship between the menu performed at the common point management device 1304 and the menu performed at the individual point management device 1303 is explained by referring to Figure 16. The numbers enclosed by the following ( ) correspond to the numbers shown in Figure 16.

The user terminal device 1302 accesses the common point management device 1304, and transmits a point conversion request (1601). The point conversion request contains data such as the code identifying that the user is a member of a common point, number of converted points, the enterprise issuing a point, etc.

The common point management device 1304 receives a point conversion request (1601) transmitted from the user terminal device 1302, and performs authentication process as to whether or not the accessor is a correctness member of common points (1602). If the accessor is a correctness member, the point management menu is performed (1603). The point management menu provided for the common point management device 1304 transmits a unique ID to the common point management device 1304 and the authentication code as an authentication certificate issued by the common point site 1304S to the individual point management device 1303 corresponding to the enterprise as a point issuer (1604). The authentication code is to certify that the access is authorized, and the accessor is a correctness member of the common points.

The menu (point issue menu) at the individual point management device 1303 accepts the access of the user terminal device 1302 through the common point management device 1304, and the subsequent point conversion process is performed between the individual point management device 1303 and the user terminal device 1302.

The individual point management device 1303 performs the authentication process to check whether or not the user if a point member of the individual point management device 1303 by receiving input of authentication information (1605), and furthermore, performs the authentication process for a point member according to the accepted authentication information (1606). The authentication information used here is, any information uniquely identifying a user, for example, a member number, an ID, a password, etc.

If it is determined in the point member authentication process that the user is not a point member, then the individual point management device 1303 transmits a guide to be a point member to the user terminal device 1302 (1607).

Meanwhile, if it is determined in the point member authentication process that the user is a point member, the individual point management device 1303 indicates the number of conversion-requested points to the common point management device 1304 (1608). The common point management device 1304 converts the number of conversion-requested points according to a conversion rate, and obtains the number of common points. The conversion rate is held at the common point management device 1304 . The common point management device 1304 returns the number of converted common points to the individual point management device 1303. The individual point management device 1303 transmits the returned number of common points to the user terminal device 1302, obtains the confirmation of the number of common points from the user terminal device 1302, and notifies the common point management device 1304 of the information. The individual point management device 1303 subtracts the number of points used in the conversion from the number of points stored in the point account 1303A, and updates the number of points stored in the point account 1303A.

After the above-mentioned point conversion process, the individual point management device 1303 notifies the user terminal device 1302 of the conversion result such as the number of common points obtained in the point conversion, number of remaining points, etc., and displays the result on the display unit (1609).

The individual point management device 1303 transmits the number of conversion-requested points requested by the user terminal device 1302 to the common point management device 1304 together with the ID, the point conversion certificate, and the authentication code stored in the common point management device 1304 (1610). The common point management device 1304 confirms the following items according to the ID and the authentication code stored in the common point management device 1304.
(1) Confirm that the transmission is performed according to a correct point conversion request.
(2) Confirm that the point conversion process is correctness performed by the point conversion certificate.

When the confirmation (1) and (2) above is performed, the common point management device 1304 accepts the transfer of the transmitted number of conversion-requested points, converts the transferred points to common points, and records the data in the common point account 1304A. At this time, the common points can be transmitted to the individual point management device 1303 to obtain the confirmation of the user.

The confirmation of the authentication code can be made by comparing the authentication code transmitted by the individual point management device 1303 with the authentication code issued by the common point management device 1304. When the authentication codes match each other, the common point management device 1304 stores common points to the common points in the common point account 1304A (1611). Using the valid term data incorporated into the authentication code when the authentication codes are compared, the validity of the authentication code is confirmed. When the valid term of the authentication code expires, the point conversion process is stopped.

Afterwards, when the user requests the use of common points, the common point management device 1304 confirms the number of points stored in the common point account 1304A, that is, the balance of common points (1612), and consumes the requested common points (1613).

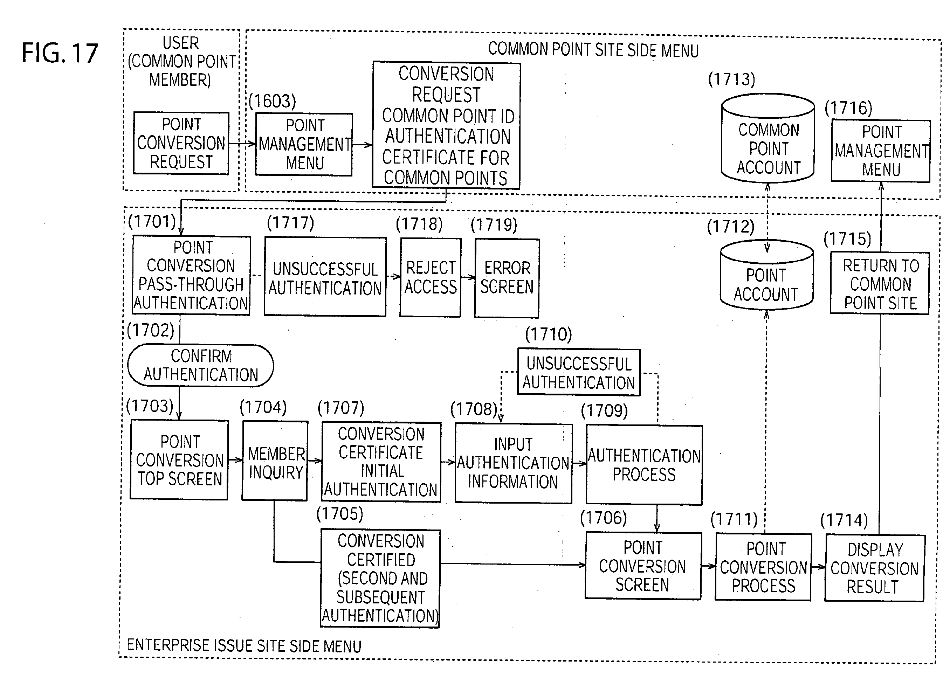

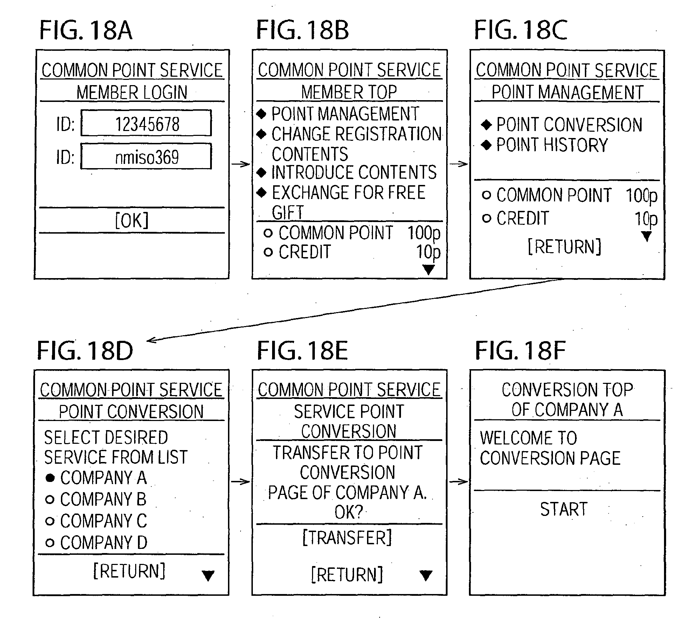

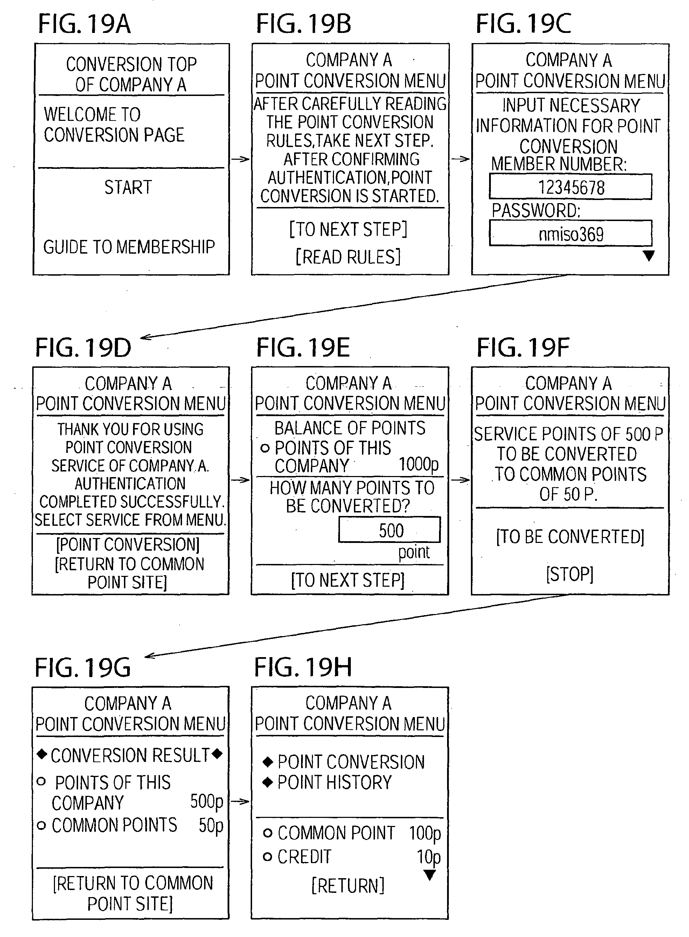

Figure 17 is a detailed explanatory view of the process performed by the common point management device 1304 (common point site 1304S) and the individual point management device 1303 (enterprise site 1303S). Figure 18 shows an example of a display screen displayed on the user terminal device 1302 when the user terminal device 1302 accesses the common point management device 1304 (common point site 1304S) . Figure 19 shows an example of a display screen displayed on the user terminal device 1302 after the access of the user terminal device 1302 is transferred to the individual point management device 1303 (enterprise site 1303S) . The following numbers enclosed by the ( ) correspond to the numbers shown in Figure 17.

Explained first below is the operation performed when the user terminal device 1302 accesses the common point management device 1304 (common point site 1304S) . When the user accesses the common point management device 1304 (common point site 1304S) using the user terminal device 1302, the common point management device 1304 (common point site 1304S) operates the point management menu (1603).

Figures. 18A to 18F show examples of display by the point management menu, and displayed on the display unit (liquid crystal display, etc.) of the user terminal device 1302. The point management menu can be performed by the API for a common point member implemented in the common point management device 1304, etc.

When the user terminal device 1302 accesses the common point management device 1304 (common point site 1304S), the point management menu displays the screen (Figure 18A) requesting the user ID and password to the user terminal device 1302. The user inputs the ID and password through the user terminal device 1302. Figure 18A shows the status of input ID and password. The common point management device 1304 (common point site 1304S) records the user ID and password set in advance, and confirms that the accessor is a member of a common point by comparing the recorded ID and password with the input ID and password.

When the point management menu confirms that the accessor is a member, it transmits a member top screen (Figure 18B) to the user terminal device 1302, and displays it on the device. Figure 18B shows an example of a member top screen displayed on the display unit of the user terminal device 1302, and displays various process menus such as point management, change of registered contents, introduction of contents, exchange for a free gift, etc. and the number of remaining common points, the value of credit, etc. The credit corresponds to a rebate coupon for use in exchanging for a free gift using common points. Common points are obtained by a game, etc., and the common points are converted to credit, and exchanged for a free gift.

On the screen shown in Figure 18B, a user can select a "point management menu", etc. using input means such as a pointing device, a button, etc. of the user terminal device 1302. When the user selects the point management menu, the screen display of the user terminal device 1302 is transferred to the point management menu screen. Figure 18C shows an example of a point management menu screen. On the point management menu screen, the "point conversion menu" for conversion of a point managed by the individual point management device 1303 (enterprise site 1303S) to a common point, and the "point history menu" referencing the history of common points can be selected.

When the user selects the "point conversion menu" using the input means such as the pointing device, the button, etc. of the user terminal device 1302, the screen display of the user terminal device 1302 is transferred to the screen of the point conversion menu. Figure 18D shows an example of the screen of the point conversion menu. On the screen of the point conversion menu, a list of enterprises (for example, companies A, B, C, and D) as providers of individual points is displayed. The display of the list of enterprises is performed by obtaining a list of the enterprises by the API for common point members, and extracting an enterprise offering a point conversion service from among the obtained enterprises. Whether or not the enterprise offering the point conversion service can be determined by providing a point conversion service attribute in the data of enterprises.

When a user selects an enterprise (for example, a company B) as a point conversion source from the list of enterprises displayed, the common point management device 1304 transfers the destination of access from the common point management device 1304 (common point site 1304S) to the individual point management device 1303 (enterprise site 1303S) of the selected enterprise. In the example of a screen shown in Figure 18E, a message to change the access to the individual point management device 1303 (enterprise site 1303S) corresponding to the company A is displayed.

When a user selects an enterprise (for example, a company A) as a point conversion source from the list of enterprises displayed, the common point management device 1304 transfers the destination of access from the common point management device 1304 to the individual point management device 1303 of the selected enterprise.

At this time, the enterprise ID of the selected enterprise is passed to the API for a common point member, and the URL in which the "host name for point conversion" of the enterprise and the "authentication certificate" certifying the registered membership are embedded is obtained, and it is set as a link destination.

The common point management device 1304 changes the connection destination of access of the user terminal device 1302 to the site of "http: //maps-host (point management name) & (authentication certificate)". The "authentication certificate" can be an authentication code. On the screen shown in Figure 18E, the information that access is changed to the company A is displayed.

After the connection destination of access of the user terminal device 1302 is changed to the individual point management device 1303 (enterprise site 1303S) corresponding to the company A, the display unit of the user terminal device 1302 displays the top screen of conversion transmitted from the individual point management device 1303 of the company A. Figure 18F shows an example of the top screen display of the conversionmenu of the enterprise site 13035-corresponding to the company A.

Explained below is the operation of transferring the connection destination of access to the individual point management device 1303. When the connection destination of access of the user terminal device 1302 is transferred from the common point management device 1304 to the individual point management device 1303, the individual point management device 1303 operates the point conversion menu. The "authentication certificate" passed as a URL is stored as a cookie.

Figures. 19A to 19H show examples of screen display on the display unit (liquid crystal display, etc.) of the user terminal device 1302 according to the point conversion menu.

When the connection destination of access is transferred, the individual point management device 1303 certifies that the access has passed through common points using pass-through data (1701 shown in Figure 17). After confirming the authentication (1702), the individual point management device 1303 displays the point conversion top screen on the display unit of the user terminal device 1302 (1703). Figure 19A shows an example of a point conversion top screen. When "start" is selected on the point conversion top screen, the member inquiry screen is displayed. Figures. 19B and 19C show examples of the member inquiry screen.

On the screen shown in Figure 19C, the user is prompted to input the member number and password set in the individual point management device 1303, and they are inquired with the storedmember number and password, thereby confirming whether or not the user is a member (1704 shown in Figure 17).

When it is confirmed that the user is a member, the individual point management device 1303 recognizes it as a conversion certificate (1705). On the other hand, if it is not confirmed by the member inquiry that the user is a member, it is considered that the conversion certificate has not been acquired, and it is the first authentication process (1707). Thus, the user is prompted to input the information for authentication on the user terminal device 1302 (1708), thereby performing the authentication process (1709). When the authentication is not acquired (1710), the user is prompted to input the information for authentication (1708), thereby performing the authentication process (1709). Figure 19D shows an example of a display unit of the user terminal device 1302 displaying the authentication.

After the authentication, the individual point management device 1303 displays the point conversion screen on the user terminal device 1302 (1706). Figure 19E shows an example of the point conversion screen displayed on the user terminal device 1302. On the point conversion screen shown in Figure 19E, the current point balance is displayed, and there is an area for input of the number of points as a request of conversion to common points. In the example shown in Figure 19E, the user currently holds 1000 P for the point services of the company A, and the user requests to convert 500 P in 1000 P to common points. The number of points is passed to the API for an enterprise. After setting the number of points to be converted, the point conversion menu (API for an enterprise) implemented in the individual point management device 1303 passes the number of points to the common point management device 1304 (1711), and receives the number of common points converted by the common point management device 1304. The received number of common points is transmitted to the user terminal device 1302 and the conversion result is displayed (1714), and the confirmation of the user is obtained. When the notification that the number of common converted points is confirmed by the user is received from the user terminal device 1302, the individual point management device 1303 determines the number of common points.

Figure 19F shows an example of the display screen of a converted common point, and shows the number of converted common points and the conversion button "convert points". In this example, assuming that the conversion rate is 1/10, 500 P as the points of the company A are converted to 50 P of common points . The individual point management device 1303 passes the "number of points to be converted" and the "authentication certificate" passed on the enterprise exchange top page to the API for an enterprise for transfer to the common point management device 1304.

When the user selects and activates the conversion button using the input means of the user terminal device 1302, the point conversion menu transmits the confirmation notification to the common point management device 1304, updates the balance of the points of the point account 1303A (1712), and transmits the data of the common points as a conversion result to the common point management devise 1304. After the conversion of points and the transfer of the points to the common point account 1304A, the individual point management device 1303 returns the number of converted points and the URL (for example, "http://maps-host (point management name) & (authentication certificate)") which can be linked to the point management screen at the common point management device 1304.

The commonpoint management device 1304 updates the common point account 1304A based on the transmitted confirmation notification (1713).

Figure 19G shows an example of a display of a conversion result of the point conversion process on the display unit of the user terminal device 1302. After the display of the conversion result, the individual point management device 1303 changes the access of the user terminal device 1302 to the common point management device 1304 using the URL (for example, http://maps-host (point management name) & (authentication certificate)) (1715). The common point management device 1304 returns access from the individual point management device 1303, and performs the point management process using the point management menu (1716).

Figure 19H shows an example of a screen display on the user terminal device 1302 by the common point management device 1304. In this example of screen display, a point conversion menu and a point history menu are displayed as a point management menu, and the number of common points and the value of credit accumulated as common points are displayed. In Figure 19H, 100 P is displayed as common points and 10 P are displayed as credit accumulated.

If the transfer status of common points is not confirmed (1717), the access is rejected (1718), and an error screen is displayed (1719).

In the above-mentioned point management system, the user converts the points provided by each individual point management device 1303 to common points, thereby adding up the common points for use.

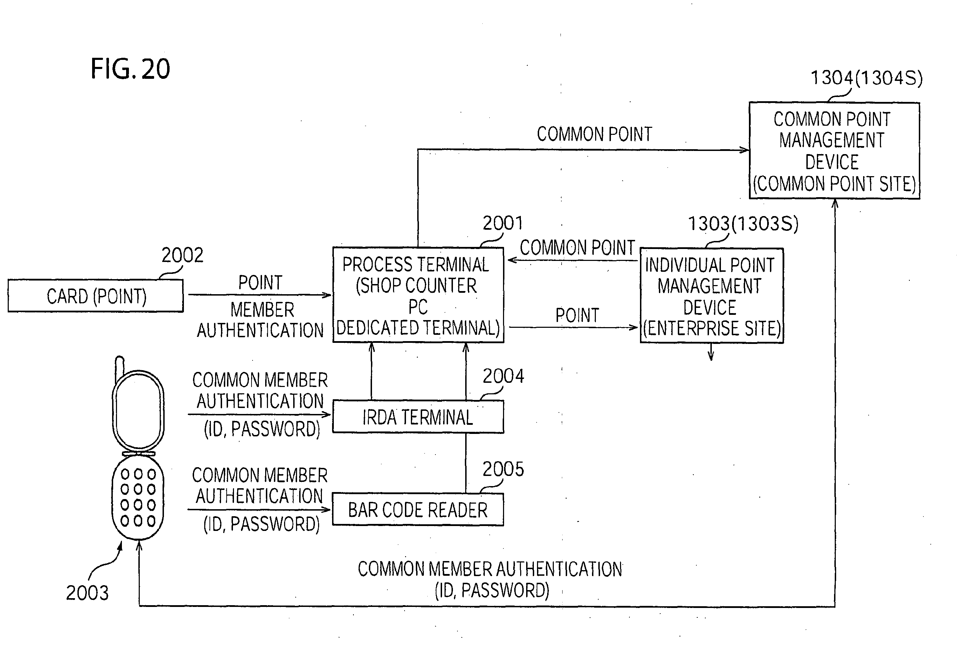

The example of a process performed at a shop counter or by a dedicated terminal in the point management according to the present invention is explained below by referring to Figures. 20 to 23. At a shop counter or by a dedicated terminal, the membership of a user in the common point management organization is authenticated using the common member authentication such as an ID, a password, etc. The common member authentication can also be an authentication code issued by the common point management device 1304 (common point site 13045).

Figure 20 shows the outline of the process. In Figure 20, the user can converts points to common points or receive goods and services using the converted common points through a process terminal 2001 such as a terminal mounted on a counter of a shop or facility for offering goods of services using common points, a terminal dedicated for common points, etc. The process terminal 2001 can be mounted in a station, convenient store, various facilities as public places, etc.

When a user converts points issued by each enterprise and held by the user to common points, the user operates the process terminal 2001 as a point converting operation. At this time, after authentication of the point membership of the user in the enterprise, and the membership of commonpoints, the point converting operation is permitted.

The point membership of a user in an enterprise can be confirmed by reading the identification data of a point member recorded on a card 2002 using reading means provided in the process terminal 2001 or reading the identification data of a point member recorded on a portable terminal 2003 such as a mobile telephone, a PDA, etc. using the infrared communication function through an IrDA terminal 2004, and matching the read identification data by the individual point management device 1303 (enterprise site 1303S).

Furthermore, the membership of a user for common points can be confirmed by a matching operation after reading, for example, the common management authentication such as an ID, a password, etc. by the process terminal 2001 using the infrared communication function of the portable terminal 2003, or reading the common management authentication (for example, a two-dimensional bar code, etc.) displayed on the display screen of the portable terminal 2003 by the process terminal 2001 using a bar code reader 2005.

The process terminal 2001 can include the IrDA terminal 2004 for infrared communication with the portable terminal 2003, or the bar code reader 2005 for reading the common management authentication displayed on the display screen of the portable terminal 2001. The means for reading the display of the common management authentication is not limited to a bar code reader, but the display can be recognized by a device which can perform image processing by reading the display using image reading means.

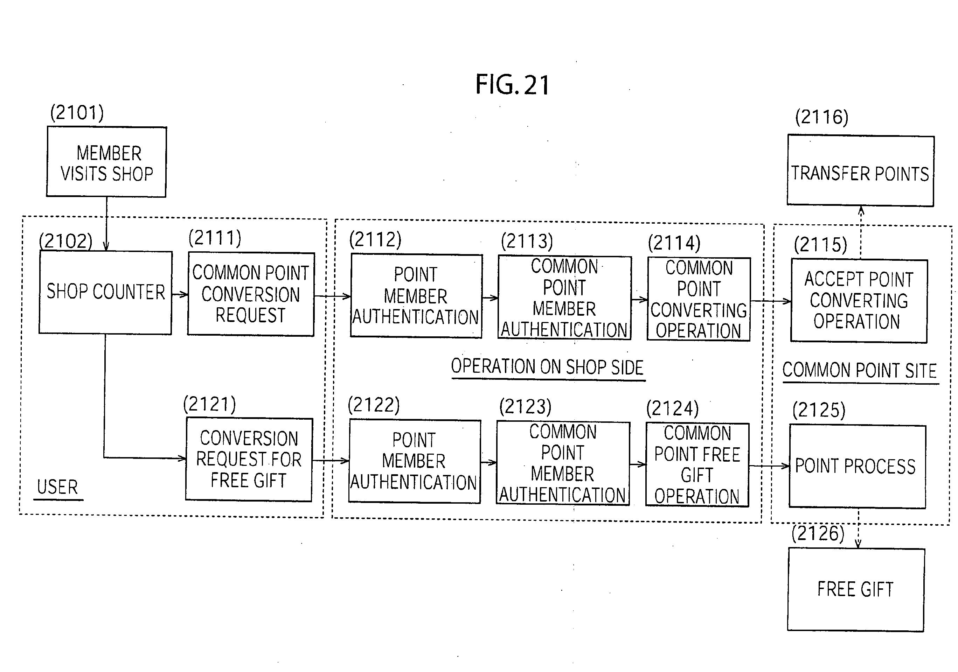

Figure 21 shows an example of a process of a request for conversion of points and a request for exchange for a free gift using common points at a shop counter, and shows the operations of a user, a shop staff, and the common point management device 1304. The following numbers enclosed by ( ) correspond to the numbers shown in Figure 21. The user is assumed to be an enterprise point member and a common point member.

When a user enters a shop (2101), the user selects conversion to common points or conversion for a free gift at the shop counter (2102). When the user selects a conversion request for common points (2111), the shop authenticates the point membership (2112) and the common point membership (2113). After confirming the authentication for both memberships, the shop converts enterprise points to common points (2114). The common point management device 1304 receives the common point converting operation (2115), and performs the process of transferring common points (2116).

On the other hand, when a request to exchange for a free gift is selected (2121), the shop checks the point membership (2122), and the common point membership (2123), and after confirming both memberships, exchanges the common points for a free gift (2124). The common point management device 1304 processes the common points used for the exchange for the free gift (2125) and provides the free gift (2126).

In addition to the exchange between common points and a free gift, it is possible to exchange common points for credit, and directly receive goods and services using the credit.

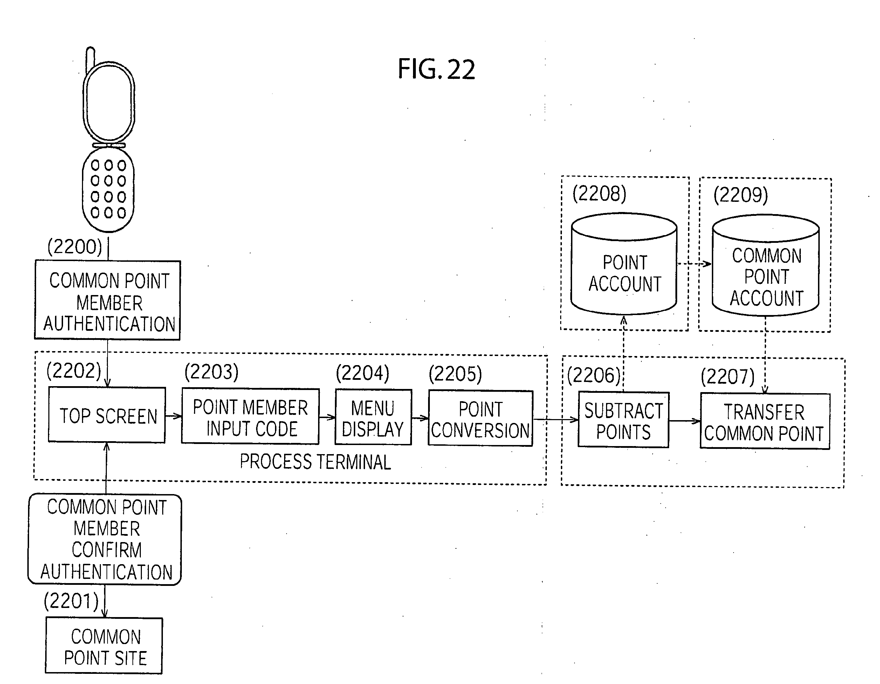

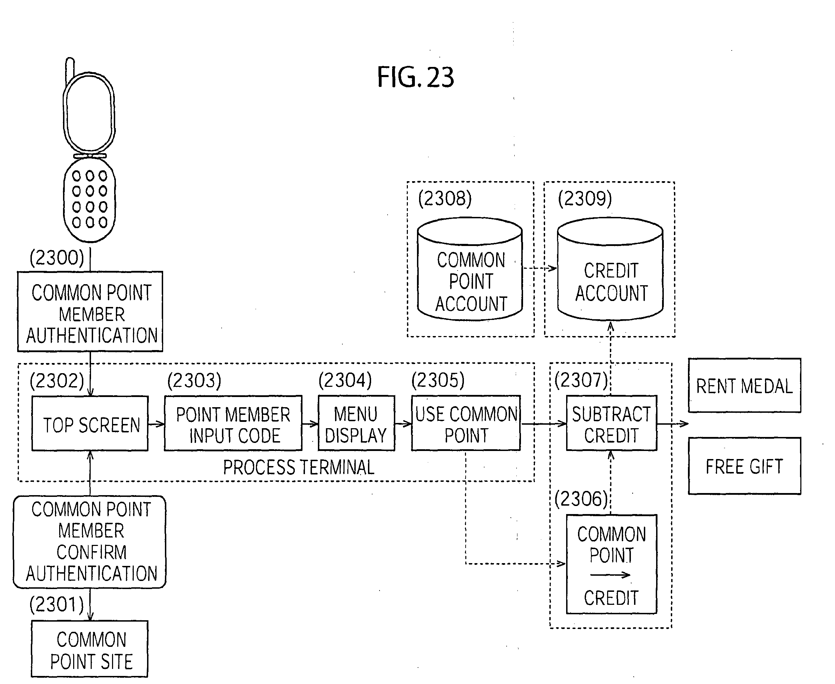

When the point conversion and the exchange for a free gift using common points are performed at a shop counter, a portable terminal can be used in authenticating a common point membership. Figures. 22 and 23 are explanatory views of the flow of processed using the portable terminal 2003.

Figure 22 shows an example of an operation when the point conversion is performed.

The portable terminal 2003 transmits to the process terminal 2001 the authentication for a common point membership such as an ID, a password, etc. through the short distance communication such as infrared communications, etc. and on the display screen, and requests the process (2200). The process terminal 2001 transmits to the common point management device 1304 the common point membership obtained from the portable terminal 2003 for confirmation of the authentication (2201). The process terminal 2001 receives the confirmation of the common point membership and displays the top screen (2202), allows the user to input the authentication code of the point member, and confirms the point membership (2203). The menu of the process contents is displayed on the screen of the process terminal device 2 (2204). When the point conversion is selected, the number of conversion-requested points is converted to the number of common points (2205), the point subtracting process is performed (2206), and the converted common points are transferred (2207). The point account 1303A managed by a database is updated in number of points in the point subtracting process (2208). The common point account 1304A is updated depending on the number of transferred common points (2209).

Figure 23 shows an example of an operation performed when a common point is used. The user obtains common point member authentication from the common point management device 1304 by download, etc., and records the obtained common point member authentication in the portable terminal 2003.

The portable terminal 2003 transmits the common point member authentication to the process terminal 2001 using the short distant communication such as infrared communication, etc. and the display screen, and requests the process (2300). The process terminal 2001 transmits the common point member authentication obtained from the portable terminal 2003 to the common point management device1304 for confirmation of the authentication (2301). The process terminal 2001 receives the authentication confirmation of the common point member authentication and displays the top screen (2302), prompts the user to input the authentication code of a point member, and confirms the point membership (2303). If the menu of the process contents is displayed on the screen (2304) and goods and services are selected through credit using common points (2305), then the common points are converted to credit (2306), and the credit corresponding to the goods and services to be used is subtracted (2307). The number of points of the common point account 1304A managed by a database is updated when common points are converted (2308), and the credit account is updated depending on the amount of credit used (2309).

Common points can be used for rental medals and balls used in amusement facilities.

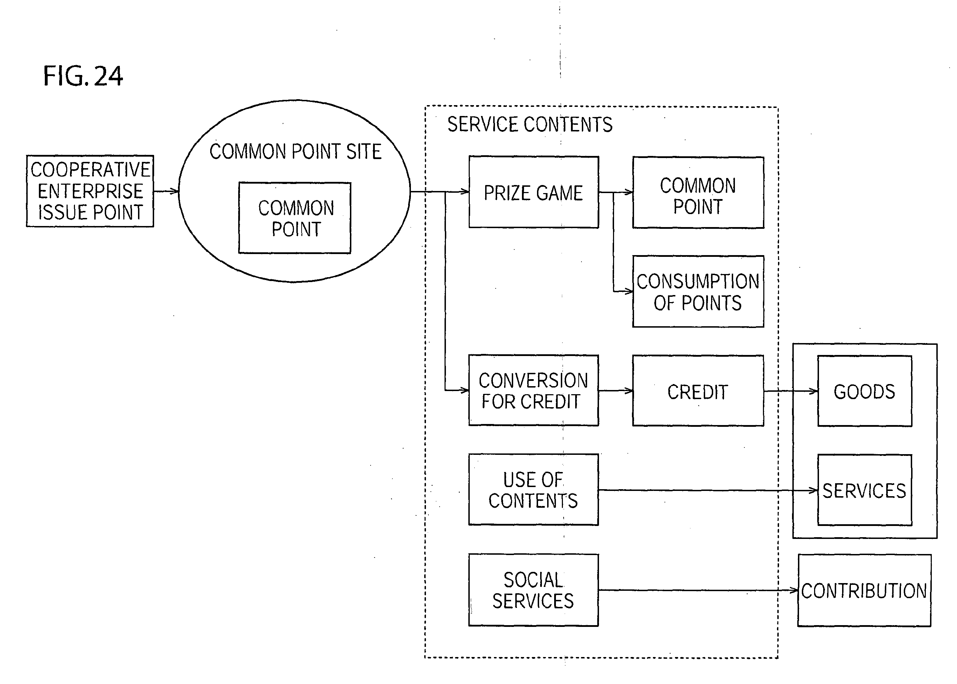

Figure 24 is an explanatory view of the use of common points. A point issued by each point issue organization is converted to a common point, and can be used for various service contents. Service contents can be, for example, a prize game, conversion to credit, use of contents, social services, etc.

In a prize game, common points can be increased using added common points, or common points are consumed. In credit conversion, credit is converted to a rebate coupon for a free gift, goods, or services.

Contents can be, for example, providing music, video, and various services distributed to a user terminal via a network.

Common points can also be contributed to various contribution organizations for social services. A contribution organization can use service contents using common points, and convert common points to currencies.

In the present embodiment, the points used in point conversion can be applied to points issued by various enterprises as point issue organizations such as points provided by amusement facilities, various shops of, for example, domestic electric appliances, gas, etc., points provided by various service facilities, etc.

The user terminal device 1302 used by the user in accessing the common point management device 1304 or the individual point management device 1303 can be a terminal held by each user such as a PC, a portable terminal, a mobile terminal, etc., and a dedicated terminal mounted in each shop.

The individual point management device 1303 can be a point issue organization for issuing a point, and a point management organization for managing an issued point.

Described below is the adjustment of points according to the present invention. In point management according to the present invention, a point issued and managed by a point issue organization and/or a point management organization is a debt obligation, and transferring a point to a common point management organization is responsible for the common point management organization.

The common point management organization reduces the transferred points as common points and provides goods and services for a user who uses the commonpoints, thereby settling the debt obligations, charging the enterprise as a point issue organization and/or point management organization for the process of the debt obligations, and gaining a profit.

In the point management system according to the present invention, the individual point management device 1303 and the common point management device 1304 keep the point use history, and performing a billing process based on the point use history, thereby adjusting the points.

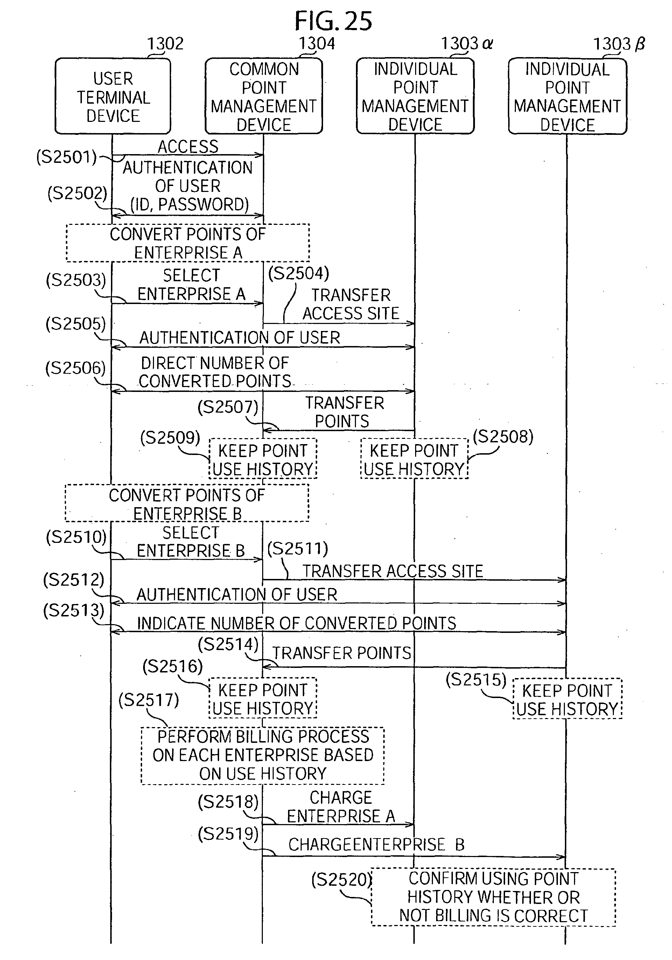

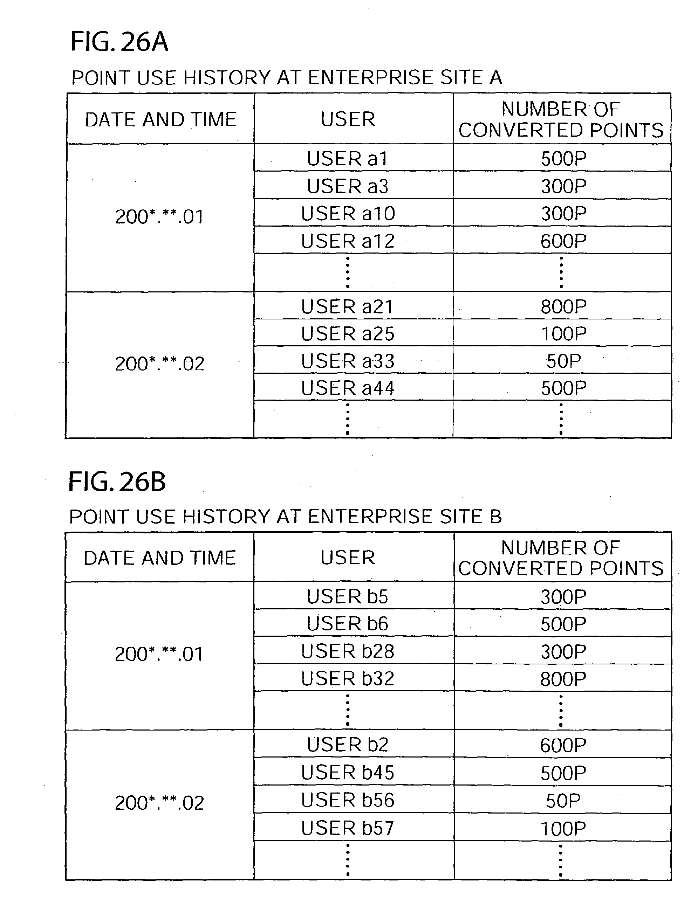

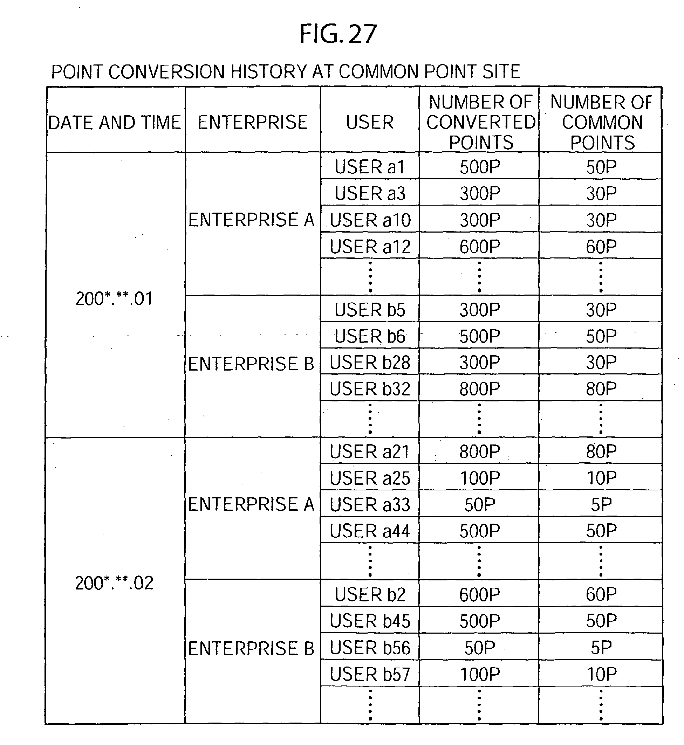

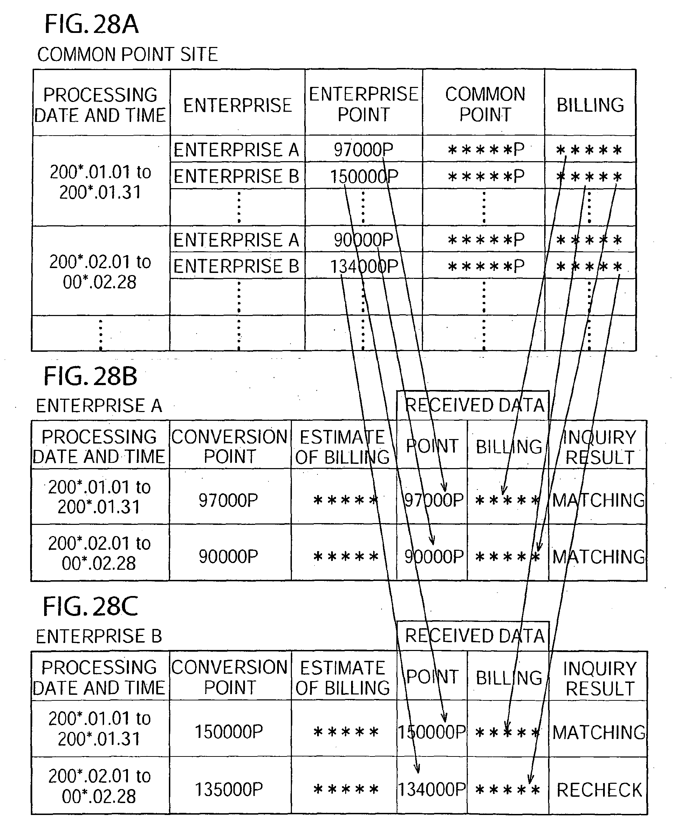

The adjustment of points is described below in detail by referring to the data status shown in Figure 25, examples of data in the point use history shown in Figures. 26 and 27, and an example of billing data shown in Figure 28.

Figure 25 shows the status of the signals and data between a user, the common point management device 1304 (common point site 1304S) and the individual point management device 1303 (enterprise site 1303S), and the following numbers enclosed by ( ) correspond to the numbers shown in Figure 25.

A user uses the user terminal device 1302 such as a PC (personal computer), a portable terminal, a mobile terminal, a dedicated terminal, etc. provided at a shop, etc. to first access the common point management device 1304 (step S2501). The user makes the registration in advance as a member of the common point management organization. When the common point management device 1304 receives access from the user, it confirms that the accessing user is a registered member of the common point management organization (step S2502). The authentication process can be performed by, for example, setting in advance an ID and a password designating the user in the common point management organization, and using them in addition to checking the personal information such as a name, gender, birthday, etc.

Explained below is the case in which the user requests a process of converting a point issued by the enterprise A (and enterprise B) to a common point.

When the user requests to use points held by the user as common points, the user selects the enterprise A (enterprise B) as an issuer of a point to be converted, and notifies the common point management device 1304 of the information (step S2503 (step S2510)). When the user selects the enterprise A (enterprise B), the connection destination of access currently made to the common point management device 1304 (common point site 1304S) is transferred to the site corresponding to the selected enterprise A (enterprise B) (step S2504 (step S2511)). By the transfer of the connection destination of access of the site, the user accesses the individual point management device 1303α (individual point management device 1303β).

The individual point management device 1303α (individual point management device 1303β) performs authentication by confirming that the currently accessing user to the current user is the same person (step S2505 (step S2512)). The authentication can be performed using, for example, an ID and a password registered by the user in the individual point management device 1303α (individual point management device 1303β). When the authentication is completed, the user notifies the individual point management device 1303α (individual point management device 1303β) of the number of points to be converted from the points held by the user (step S2506 (step S2513)).

The individual point management device 1303α (individual point management device 1303β) checks the conversion conditions by determining whether or not the number of conversion-requested points requested by the user has exceeded the number of points held in the point account 1303A of the user, whether or not the point use term is valid. If the conversion conditions are satisfied, the number of conversion-requested points is transmitted to the common point management device 1304 to allow the common point management device 1304 to convert the points. The number of converted common points is returned to the individual point management device 1303α (individual point management device 1303β). Thus, the user terminal device 1302 can make confirmation.

The individual point management device 1303α (individual point management device 1303β) transfers the number of converted common points to the common point account 1304A (step S2507 (step S2514)), subtracts the number of points used in conversion from the number of points held in the point account 1303A, thereby updating the data. The common point management device 1304 records the transferred common points in the common point account 1304A.

The individual point management device 1303α (individual point management device 1303β) records the history of the transferred points (step S2508 (step S2515)). Figures. 26A and 26B show examples of the data of the point use history of the individual point management device 1303α and the individual point management device 1303β. For example, the user and the number of converted points are recorded.

The common point management device 1304 also records the history of the points transferred from the individual point management device 1303α (individual point management device 1303β) (step S2509 (step S2516)). Figure 27 shows an example of data of the point use history of the common point management device 1304. For example, an enterprise, a user, the number of converted points, and the number of common points converted at a predetermined conversion rate are recorded.

Figure 25 shows only two devices, that is, the individual point management device 1303α and the individual point management device 1303β, as the individual point management devices 1303. However the present invention is not limited to this application, but can also be applied to any enterprise in cooperation with the common point management organization in converting point conversion.

By the transfer of the points, each enterprise is responsible for the debt obligations for the points for the common point management organization. Meanwhile, the common pointmanagement organization holdscredit for each enterprise. Thus, the common point management device 1304 as a common point management organization charges each enterprise for the points (step S2517), and each enterprise pays the corresponding value for each billing, thereby settling the adjustment of points.

The billing from the common point management device 1304 to each enterprise can be collectively performed at a predetermined time point, for example, at the end of week, at the end of month, at the end of quarter, etc. for a predetermined period (for example, in week units, in month units, in several month units, annually, etc.). The common point management device 1304 accumulates points for each enterprise in a predetermined period based on the data of the point use history, calculates the amount of charge for the points, and charges each enterprise with the accumulated points and the amount of charge (step S2518, step S2519).

Figure 28A shows an example of billing data to be transmitted to each enterprise or the individual point management device 1303 (enterprise site 1303S) from the common point management device 1304. For example, the accumulated value of points transferred from an enterprise in each billing period, the value of common points, the amount of charge, etc. can be included in the billing data.

Each enterprise accumulates the points in a predetermined period based on the data of point use history, and the amount of charge for the points is estimated. Figures. 28B and 28C show examples of data estimated by the enterprises A and B. For example, in each billing period, an enterprise can make a transfer to include the accumulated value of points, an estimated value, etc.

Each enterprise compares the billing data such as accumulated points, the amount of charge, etc. transmitted from the common point management device 1304 with the accumulated points and the amount of charge with the accumulated points and the amount of charge calculated by each enterprise to confirm whether or not the billing from the common point management device 1304 is correct (step S2520).

In Figure 28, the correctness of the charge is confirmed with the number of points and the amount of charge, but it is also possible to confirm it only based on the number of points.

According to the embodiment of the present invention, unidirectional transmission can be performed from the individual point management device 1303 to the common point management device 1304. With this communication system, the user information can be prevented from being disclosed from the individual point management device 1303. Thus, the security can be successfully ensured.

## Claims

1. A point management method which converts points issued by a plurality of point issue organizations to common points managed and operated by a common point management organization,
**characterized in that**:
the common point management organization accepts access from a user requesting to convert a user point issued by the point issue organization to a common point; transfers a connection destination of the access to a point issue organization which issues an original point or a point management organization which manages the point; and receives a transfer of a conversion-requested point from the point issue organization or point management organization.

2. The point management method according to claim 1,
**characterized in that**:
the common point management organization issues an authentication code for transfer of the connection destination of access to a point management organization; adds the authentication code to address information about the point issue organization which issues an original point or the point management organization which manages the point; transfers the connection destination of access to the point issue organization or the point management organization according to the address information with the authentication code added to the information; receives a transfer of conversion-requested points from the point issue organization or the point management organization based on confirmation of the authentication code transmitted from the point issue organization or the point management organization; and converts the transferred conversion-requested points to common points, and adds the converted common points to a common point account for management of common points.

3. A point management method which converts points issued by a plurality of point issue organizations to common points managed and operated by a common point management organization,
**characterized in that**
the point issue organization which issues an original point or the point management organization which manages the point receives access from a user requesting to convert a point by a transfer of a connection destination of access by the common point management organization, and transfers the point to a user conversion-requested common point management organization.

4. The point management method according to claim 3,
**characterized in that**
the point issue organization or the point management organization obtains an authentication code issued by the common point management organization and added to address information used in transferring the connection destination of access from the common point management organization, and transfers the user conversion-requested point to the common point management organization with the authentication code.

5. A point management method which converts points issued by a plurality of point issue organizations to common points managed and operated by a common point management organization, comprising:
the common point management organization accepts access from a user requesting to convert a user point issued by the point issue organization to a common point; and transfers a connection destination of the access to the point issue organization which issues an original point or the point management organization which manages the point;
the point issue organization or the point management organization accepts the access by the transfer of the connection destination of access by the common point management organization and transfers the user conversion-requested point to a common point management organization; and
the common point management organization receives the transfer of the conversion-requested point from the point issue organization or the point management organization.

6. The point management method according to claim 5,
**characterized in that**:
the common point management organization accepts the access requesting the conversion request, issues an authentication code, and adds the authentication code to address information about the point issue organization which issues an original point or the point management organization which manages the point, and transfers the connection destination of access to the point issue organization or the point management organization according to the address information with the authentication code added to the information;
the point issue organization or the point management organization obtains the authentication code added to the address information; and transfers the user conversion-requested point to the common point management organization with the authentication code; and
the common point management organization accepts the point transferred by the point issue organization or the point management organization when correctness of the authentication code transmitted from the point issue organization or the point management organization is confirmed.

7. The point management method according to any of claims 2, 4, and 6, **characterized in that**
the authentication code certifies that an accessing user is a member of the common point management organization.

8. The point management method according to any of claims 1, 2, 5, and 6, **characterized in that**
the common point management organization keeps a history of converted points, and requests the point issue organization or the point management organization to adjust the points based on the history.

9. The point management method according to any of claims 1, 2, 5, and 6, **characterized in that**
the common point management organization holds a conversion rate from a conversion-requested point to a common point, and converts the conversion-requested point to the common point using the conversion rate.

10. The point management method according to claim 3 or 4,
**characterized in that**
the point issue organization or the point management organization receives access from the user requesting to convert a point by the transfer of the connection destination of access by the common point management organization, and transfers the point to the common point management organization conversion-requested by the user.

11. The point management method according to claim 3 or 4,
**characterized in that**
the point issue organization and/or the point management organization keeps a history of the conversion-requested point, and matches the history with a request from the common point management organization.

12. The point management method according to any of claims 1 to 11, **characterized in that**
data transmission between the point issue organization or the point management organization and the common point management organization is unidirectional transmission from the point issue organization or the point management organization to the common point management organization.

13. A point management system which converts points issued by a plurality of individual point management device to common points managed and operated by a common point management device,
**characterized in that**
the common point management device comprises:
means for transferring a connection destination of access from a user terminal device requesting to convert a user point issued by the individual point management device to a common point to the individual point management device which issues an original point; and
means for receiving a transfer of the conversion-requested point from the individual point management device.

14. The point management system according to claim 13,
**characterized in that**:
the common point management device further comprises:
means for issuing an authentication code:
means for adding a converted common point to a common point account for management of common points after receiving transfer from means for receiving the transfer; and
the transfer of the connection destination of access performed by the means for the transfer is performed by adding the authentication code to the address information about the individual point management device which issues the original point, and using the address information with the authentication code added to the information.

15. A point management system which converts points issued by a plurality of individual point management device to common points managed and operated by a common point management device,
**characterized in that**
the individual point management device comprises means for transferring a conversion-requested point by a user to the common point management device.

16. The point management system according to claim 15,
**characterized in that**
the individual point management device further comprises means for obtaining the authentication code added to the address information, and transferring a conversion-requested point by a user to the common point management device with the authentication code.

17. A point management system which converts points issued by a plurality of individual point management device to common points managed and operated by a common point management device,
**characterized in that**
the common point management device comprises:
means for transferring a connection destination of access from a user requesting to convert a user point issued by the individual point management device to a common point to the individual point management device which issues an original point; and
means for receiving a transfer of a conversion-requested point from the individual point management device; and
the individual point management device comprises means for transferring a user conversion-requested point to the common point management device.

18. The point management system according to claim 17, wherein:
the common point management device further comprises:
means for issuing an authentication code; and
means for adding a converted common point to a common point account for management of common points after receiving the transfer from the means for receiving the transfer;
the transfer of the connection destination of access performed by the means for the transfer is performed by adding the authentication code to the address information about the individual point management device which issues the original point, and using the address information with the authentication code added to the information; and
the individual point management device comprises means for obtaining the authentication code added to the address information, and transferring a user conversion-requested point to the common point management device with the authentication code.

19. The point management system according to any of claims 14, 16, and 18, **characterized in that**
the authentication code certifies that an accessing user is a member of the common point management device.

20. The point management system according to any of claims 13, 14, 17, and 18, **characterized in that**
the common point management device further comprises means for keeping a history of converted points; and means for requesting the individual point management device to adjust points based on the history.

21. The point management system according to any of claims 13, 14, 17, and 18, **characterized in that**
the common point management device holds a conversion rate from a conversion-requested point to a common point, and converts the conversion-requested point to the common point using the conversion rate.

22. The point management system according to claim 15 or 16, **characterized in that**
the individual point management device receives access from a user requesting to convert a point by a transfer of a connection destination of access by the common point management device, and transfers the point to a user conversion-requested common point management device.

23. The point management system according to claim 15 or 16, **characterized in that**
the individual point management device further comprises: means for keeping a history of a conversion-requestedpoint,and means for matching the history with a request from the common point management device.

24. The point management system according to any of claims 13 to 18, **characterized in that** data transmission between the individual point management device and the common point management device is unidirectional transmission from the individual point management device to the common point management device.
